# EUROPÄISCHE PATENTSCHRIFT

(11) **EP 2 428 405 B1**
(45) Veröffentlichungstag und Bekanntmachung des Hinweises auf die Patenterteilung: **07.10.2015**
(21) Anmeldenummer: 11007373.1
(22) Anmeldetag: 09.09.2011
(51) Int. Cl.: B60R 9/06, B60D 1/06, B60D 1/52, B60D 1/64, B60R 19/48

(54) **Kupplung für ein Lastenträger-System mit einem Spannteil**
Coupling for a load carrier system with a tensioning member
Embrayage pour un système de support de charge doté d'un élément de serrage

(30) Priorität: 13.09.2010 DE 102010045104; 11.02.2011 DE 202011002670 U
(43) Veröffentlichungstag der Anmeldung: 14.03.2012
(73) Patentinhaber: WESTFALIA - Automotive GmbH, 33378 Rheda-Wiedenbrück (DE)
(72) Erfinder: Becker,Wilfried, 33397 Rietberg (DE); Hermbusch, Gerhard, 33449 Langenberg (DE); Hils, Fabian, 33161 Hövelhof (DE); Peitz, Jürgen, 33378 Rheda-Wiedenbrück (DE)
(74) Vertreter: Patentanwälte Bregenzer und Reule Partnerschaftsgesellschaft mbB

(56) Entgegenhaltungen:
- EP-A1- 0 747 244
- EP-A2- 1 690 747
- EP-A2- 1 757 488
- WO-A1-03/039912
- DE-B3-102005 033 082

## Beschreibung

Die Erfindung betrifft eine Kupplung für ein Lastenträger-System für ein Kraftfahrzeug, gemäß dem Oberbegriff des Anspruchs 1.

Eine derartige Kupplung für ein Lastträgersystem ist beispielsweise aus DE 44 03 715 A1 bekannt.

Eine weitere Kupplung für ein Lastträgersystem ist beispielsweise aus EP 1 757 488 A2 bekannt. Durch ein einfaches Anstecken des Lastenträgers an die Fahrzeug-Halterung, wobei am einen Teil eine Steckaufnahme, am anderen Teil ein Steckvorsprung vorgesehen ist, ist eine Montage möglich. Die bekannte Kopplung nutzt eine Art Innenverspannung, d.h. dass Rastelemente oder Spannelemente von radial innen aus Steckvorsprung heraus verdrängt werden, um sich mit einer Gegenkontur quasi zu verspannen.

Die Möglichlteiten sind allerdings eingeschränkt, da nämlich die Verspannung nur im Prinzip in Richtung der Steckachse wirken kann.

Es ist daher die Aufgabe der vorliegenden Erfindung, eine Kupplung für einen Lastenträger bereitzustellen, die verbesserte Fixiermittel aufweist.

Zur Lösung der Aufgabe ist eine Kupplung für ein Lastenträger-System gemäß der technischen Lehre des Anspruchs 1 vorgesehen

Ein Grundgedanke der Erfindung ist es, dass der Steckvorsprung, der in die Steckaufnahme eingreift, durch außenseitig angeordnete Spannmittel verspannt wird. Dadurch ist der zweckmäßigerweise vorhandene Formschluss zwischen dem Steckvorsprung und der Steckaufnahme nicht durch beilspielsweise das Widerlager oder das Spannteil beeinträchtigt ist.

Durch Betätigen des Spanngliedes ist der Steckvorsprung mit der Steckaufnahme verspannbar. Der Spannen soll dabei in einem relativ weiten Sinne verstanden werden, beispielsweise als ein formschlüssiger Halt. Selbstverständlich ist es vorteilhaft, wenn ein relativ festes Verspannen durch die erfindüngsgemäßen Fixiermittel möglich ist, so dass der Steckvorsprung in der Steckaufnahme fest und beim Fahrbetrieb klapperfrei gehalten ist.

Eine vorteilhafte Ausführungsform sieht vor dass das Spannteil einen Spannarm umfasst oder an einem Spannarm angeordnet ist. Der Spannarm ist mit dem Widerlager in Eingriff bringbar. Beispielsweise ist das Spannteil an einem freien Ende des Spannarms vorgesehen. Der Spannarm hat vorzugsweise die Gestalt einer Pratze.

Eine bevorzugte Ausführungsform sieht vor, dass an dem Spannarm oder dem Widerlager mindestens ein Haken oder Zugyorsprung angeordnet ist, der mit einer korrespondierenden Hakenaufnahme oder einer Zugaufnahme am jeweils anderen Bauteil (dem Widerlager oder dem Spannarm) in Eingriff bringbar ist.

Der Spannarm ist zweckmäßigerweise an dem Steckvorsprung oder der Steckaufnahme schwenkbeweglich oder verschieblich oder beides gelagert. Somit kann der Spannarm durch Schwenken oder Verschieben in Eingriff mit dem Widerlager oder außer Eingriff aus dem Widerlager gebracht werden.

Vorzugsweise ist der Spannarm an einem unten noch im Detail beschriebenen Spannanker schwenkbar gelagert. Der Spannanker bildet zweckmäßigerweise ein Lagerelement für den Spannarm. Beispielsweise ist der Spannarm an dem Spannanker, insbesondere dessen Zugstab, schwenkbeweglich gelagert.

Erfindungsgemäß umfassen die Fixiermittel einen, insbesondere quer zur Steckachse und/oder quer zur Längserstreckungsrichtung des Befestigungsarms wirkenden und/oder verlaufenden, Spannanker, der an einem an der Steckaufnahme oder dem Steckvorsprung angeordneten Widerlager gehalten ist und sich mit einem Spannglied am jeweils anderen Bauteil, dem Steckvorsprung oder der Steckaufnahme, abstützt, so dass durch Spannen des Spannglieds der Steckvorsprung mit der Steckaufnahme verspannbar ist.

Das Spannteil ist in Richtung einer Eingriffstellung, in der das Widerlager und das Spannteil in Eingriff miteinander sind, und zweckmäßigerweise auch in Richtung eines Verrastens mit dem Widerlager durch eine Federanordnung belastet. Beispielsweise greift das Spannteil dann in das Widerlager ein. Dies hat den Vorteil, dass ohne eine Betätigungshandlung der Eingriff der beiden Komponenten herstellbar ist. Am Spannteil und/oder am Widerlager ist zweckmäßigerweise mindestens eine Verdrängerschräge vorgesehen, die zum Verdrängen des Spannteils vom Widerlager weg beim Einstecken des Steckvorsprungs in die Steckaufnahme wirkt. Dadurch die Bedienung einfach, insbesondere im Zusammenhang mit der vorgenannten Federbelastung.

Weiterhin sind eine oder mehrere Spannschrägen, zum Beispiel Keilflächen, Exzenterflächen oder dergleichen vorteilhaft, die im Sinne eines Verspannens des Steckvorsprungs mit der Steckaufnahme wirken. Beispielsweise haben das Spannteil und/oder das Widerlager Schrägflächen, die beim Betätigen des Spanngliedes aneinander entlang gleiten und im Sinne eines Verspannens wirken.

Vorzugsweise ist vorgesehen, dass die Fixiermittel einen insbesondere quer zur Steckachse oder quer zur Längserstreckungsrichtung des Befestigungsarms wirkenden und verlaufenden Spannanker umfassen, der an einem an der Steckaufnahme oder dem Steckvorsprung angeordneten Widerlager gehalten ist und sich mit einem Spannglied am jeweils anderen Bauteil, dem Steckvorsprung oder der Steckaufnahme, abstützt, so dass durch Spannen des Spannglieds der Steckvorsprung mit der Steckaufnahme verspannbar ist.

Die Fixiermittel umfassen zweckmäßigerweise also einen längs oder quer zur Steckachse wirkenden und verlaufenden Spannanker. Der Spannanker ist vorteilhaft direkt an dem Widerlager gehalten, das an der Steckaufnahme oder dem Steckvorsprung angeordnet ist, zweckmäßigerweise mit einem seitlichen Versatz dazu. Der Spannanker stützt sich mit einem Spannglied, beispielsweise einer Spannmutter, am jeweils anderen Bauteil, also dem Steckvorsprung oder der Steckaufnahme ab, so dass durch Spannen des Spanngliedes der Steckvorsprung mit der Steckaufnahme verspannbar ist. Durch den quer zur Steckachse wirkenden Spannanker, beispielsweise diagonal wirkenden Spannanker, ist eine optimale Verspannung möglich.

Das Spannteil kann zwar in einer Ausführungsform direkt am Spannanker vorgesehen sein, dort beispielsweise ein Widerlagerteil bilden. Eine andere Ausführungsform sieht jedoch vor, dass das Spannteil mit dem Spannanker bewegungsgekoppelt ist. Beispielsweise kann der Spannanker auf den oben erläuterten Spannarm wirken, an dem seinerseits wiederum das Spannteil angeordnet ist oder der das Spannteil bildet.

Das Widerlager weist zweckmäßigerweise mindestens eine Widerlageraufnahme zur verdrehsicheren Aufnahme des Spannteils. Dieses Spannteil kann beispielsweise an dem vorgenannten Spannanker angeordnet sein.

Der Spannanker kann in Richtung einer Eingreifstellung federbelastet sein, in der das Spannteil, beispielsweise der Spannarm oder auch ein sonstiges Spannteil, das zum Beispiel direkt am Spannanker angeordnet sein kann, in das Widerlager eingreift. Beispielsweise ist zwischen dem Spannglied und dem Bauteil, an dem sich das Spannglied abstützt, zum Beispiel der Steckaufnahme, der dem Steckvorsprung oder dergleichen, eine Feder vorgesehen. Die Feder kann sich beispielsweise direkt oder indirekt am Steckvorsprung oder der Steckaufnahme der erfindungsgemäßen Kupplung abstützen. Beispielsweise durchdringt der Spannanker, insbesondere ein Zugstab, die Feder.

Der Spannanker durchdringt beispielsweise den Steckvorsprung oder die Steckaufnahme oder beides, beispielsweise diagonal zur Steckachse. Bevorzugt ist für den Spannanker eine Führungshülse angeordnet, die den entsprechenden Querverlauf oder Diagonalverlauf hat. Somit ist der Spannanker beispielsweise in dieser Hülse drehbar gelagert.

Das Widerlager und ein Längsanschlag des Steckvorsprungs oder der Steckaufnahme sind bezüglich der Steckachse drehwinkelversetzt und/oder haben einen Längsabstand bezüglich der Steckachse. Vorzugsweise sind das Widerlager und der Längsanschlag an einander entgegengesetzten Seiten des Steckvorsprung oder der Steckaufnahme angeordnet. Somit ist also ein optimales Spannkonzept realisiert, das heißt dass der Spannanker den Steckvorsprung mit der Steckaufnahme schräg und quer zur Steckachse verspannt. Eine gewisse Asymmetrie der Spannkräfte ist somit gegeben, die vorteilhaft auf den formschlüssigen und sicheren Halt der Lastenträgers am Fahrzeug-Träger sorgt.

Das Widerlager umfasst zweckmäßigerweise mindestens eine Widerlageraufnahme zur verdrehsicheren Aufnahme eines Spannteils des Spannankers. Bevorzugt ist dabei die Anordnung so getroffen, dass das Spannteil von der Widerlager-Aufnahme lösbar ist, so dass der Spannanker quasi aus dem Widerlager ausgehängt werden kann, wenn der Lastenträger vom Kraftfahrzeug entfernt werden soll. Es versteht sich, dass als Widerlager beispielsweise auch eine Schraubaufnahme möglich ist.

An einander entgegengesetzten Längsendbereichen eines Zugstabes des Spannankers ist einerseits das vorgenannte Spannteil, andererseits vorteilhaft ein Gewinde angeordnet, auf das beispielsweise ein Spannglied aufschraubbar ist. Dieses Spannglied ist vorzugsweise verschließbar. Somit kann also durch Verschließen des Spanngliedes der Lastenträger am Kraftfahrzeug gesichert werden.

An der mindestens einen Fahrzeug-Halterung und dem mindestens einen Befestigungsarm sind Steckmittel zum Anstecken des mindestens einen Befestigungsarms an die mindestens eine Fahrzeug-Halterung entlang einer Steckachse vorgesehen, wobei die Steckmittel eine Steckaufnahme und einen Steckvorsprung umfassen. Somit kann also beispielsweise ein freies Ende des Befestigungsarms einen Steckvorsprung bilden, die Fahrzeug-Halterung eine Steckaufnahme bilden oder aufweisen. Es ist aber umgekehrt denkbar, dass nämlich am Befestigungsarm eine Steckaufnahme vorhanden ist, die auf einen korrespondierenden Steckvorsprung an der Fahrzeug-Halterung aufgesteckt wird.

An dieser Stelle sei bemerkt, dass selbstverständlich eine verdrehsichere Montage zweckmäßig ist, das heißt, dass an der Fahrzeug-Halterung und an dem Befestigungsarm Dreh-Blockiermittel oder Formschlusskonturen vorhanden sind, mit denen der Lastenträger verdrehsicher am Fahrzeug-Träger montierbar ist. Diese Dreh-Fixiermittel können Bestandteile der vorgenannten Fixiermittel bilden.

Vorzugsweise ist vorgesehen, dass die mindestens eine Fahrzeug-Halterung an dem an dem Kraftfahrzeug angeordneten oder anordenbaren Fahrzeug-Träger derart angeordnet ist, dass sie bei am Kraftfahrzeug angeordnetem Fahrzeug-Träger im Bereich einer Quermitte des Kraftfahrzeugs hinter einem Kennzeichen und/oder hinter einem Stoßfänger des Kraftfahrzeugs angeordnet ist.

Bei beiden Komponenten, der Fahrzeug-Halterung und dem Befestigungsarm, ist es zweckmäßig, wenn sie im am Kraftfahrzeug montierten Zustand einen verhältnismäßig großen Abstand von einem Untergrund, beispielsweise der Fahrbahn haben. Beispielsweise ist der Lastenträger so getroffen, dass er einen quermittigen oder mehrere quermittige Befestigungsarme hat, an dem dann der Tragbereich, beispielsweise eine Tragplattform, ein Tragegestell oder dergleichen, angeordnet ist.

Eine bevorzugte Ausführungsform der Erfindung sieht vor, dass der Lastenträger nur einen einzigen Befestigungsarm und der Fahrzeugträger nur eine einzige Fahrzeug-Halterung aufweist. Prinzipiell wäre es auch denkbar, dass beispielsweise zwei oder mehr relativ schmal beieinander angeordnete Befestigungsarme vorgesehen sind.

An der Fahrzeug-Halterung und dem Befestigungsarm sind zweckmäßigerweise elektrische Fahrzeug-Kontakte und elektrische Lastenträger-Kontakte zur Herstellung einer elektrischen Verbindung zwischen dem Kraftfahrzeug und dem Lastenträger vorgesehen. Dies hat insbesondere dann große Vorteile, wenn nur ein einziger Befestigungsarm vorhanden ist. Mit dem Anstecken oder Anbinden des einen Befestigungsarms an die eine Fahrzeug-Halterung ist somit nicht nur die mechanisch belastbare Verbindung zwischen Kraftfahrzeug und Lastenträger hergestellt, sondern auch gleichzeitig eine elektrische Verbindung. Über die vorgenannte elektrische Verbindung ist beispielsweise eine Bus-Verbindung möglich. Bevorzugt können somit beispielsweise elektrische Stromverbraucher, z.B. Heckleuchten, am Lastenträger vom Bordnetz des Kraftfahrzeuges mit versorgt werden.

Vorzugsweise ist bei einer Kupplung der eingangs genannten Art vorgesehen, dass sie Befestigungsmittel zum Befestigen der Fahrzeug-Kontakte an der Fahrzeug-Halterung und/oder Lastenträger-Kontakte an dem Befestigungsarm mit einem Spiel längs und/oder quer zu der Steckachse aufweist.

Die Lastenträger-Kontakte und/oder die Fahrzeug-Kontakte sind sozusagen schwimmend gelagert, so dass gegebenenfalls vorhandene Toleranzen bzw. Maßabweichungen zwischen der Fahrzeug-Halterung und dem Befestigungsarm, insbesondere dem Steckvorsprung und der Steckaufnahme, ausgeglichen werden.

Bevorzugt sind die Lastenträger-Kontakte der Lastenträger-Kontakteinheit oder auch die Fahrzeug-Kontakte der Fahrzeug-Kontakteinheit jeweils gemeinsam an einem Kontaktträger angeordnet oder auch in einem Gehäuse. Selbstverständlich kann im Gehäuse auch ein Kontaktträger für die jeweiligen Kontakte vorgesehen sein. Bevorzugt ist es, wenn beide Kontaktgruppen, d.h. die Fahrzeug-Kontakte und die Lastenträger-Kontakte, jeweils an einem Kontaktträger oder in einem Gehäuse angeordnet sind.

Dabei ist es möglich, dass die Kontakte an dem Kontaktträger oder im Gehäuse mit zumindest einem Teil des Spiels längs und/oder quer zu der Steckachse gehaltert oder aufgenommen sind. Somit sind also die Kontakte bereits zu einem Toleranzausgleich ausgestaltet.

Der Kontaktträger oder das Gehäuse weisen zweckmäßigerweise einen Deckel auf, durch den zu den jeweiligen Fahrzeug-Kontakten oder Lastenträger-Kontakten führende Leitungen, insbesondere sämtliche Leitungen, hindurchgeführt sind. An dem Deckel ist beispielsweise eine Tülle, ein Abknickschutz oder dergleichen, vorgesehen.

Der Deckel ist zweckmäßigerweise mit dem Kontaktträger und/oder dem Gehäuse verrastet. Beispielsweise ist ein Rasthalter vorgesehen, der an einer von den Kontakten abgewandten Rückseite des Deckels an diesem anliegt, diesen sozusagen abstützt, und von dem mindestens 2 Rasthaken abstehen. Die Rasthaken stehen beispielsweise nach vorn, vor eine Vorderseite des Deckels vor, so dass sie in das Gehäuse eingreifen können. Es versteht sich, dass die Rasthaken auch seitlich in das Gehäuse neben dem Deckel eingreifen können, beispielsweise wenn der Deckel in einer Aufnahme des Gehäuses aufgenommen ist.

Eine geschützte Anordnung der Fahrzeug-Kontakte und Lastenträger-Kontakte sieht vor, dass sie in einem Innenraum der Fahrzeug-Halterung und des Befestigungsarms angeordnet sind, so dass sie eingehaust sind, wenn der Befestigungsarm an der Fahrzeug-Halterung befestigt ist. Somit bilden also die Fahrzeug-Halterung und/oder der Befestigungsarm beispielsweise ein Schutzgehäuse für die Lastenträger-Kontakte bzw. die Fahrzeug-Kontakte, wenn das System im Einsatz ist.

Insbesondere bei dieser geschützten Konfiguration ist es vorteilhaft, wenn der erfindungsgemäße Spielausgleich vorhanden ist. Die Steckaufnahme und der Steckvorsprung passen in der Regel formschlüssig zueinander, wobei die Maßtoleranzen insbesondere des Steckvorsprung auf dessen Außenkontur optimiert sind, während die Innenkontur maßliche Abweichungen relativ zu Außenkontur aufweisen kann. Wenn nun die im Steckvorsprung angeordneten Kontakte relativ zur Innenkontur mit einem vorbestimmten Maß beabstandet sind, besteht das Problem, dass sie nicht in die an der Steckaufnahme angeordneten Kontakte passen. Auch in einem solchen Fall schaffen die nachfolgend erläuterten Maßnahmen Abhilfe:
Die Befestigungsmittel umfassen beispielsweise einen Haltevorsprung, der vor eine Wand der Steckaufnahme oder des Steckvorsprungs in den jeweiligen Innenraum vorsteht und in eine Halteaufnahme der Fahrzeug-Kontakteinheit oder der Lastenträger-Kontakteinheit mit einem Spiel längs und/oder quer zu der Steckachse eingreift. Beispielsweise ist die Halteaufnahme als ein Langloch ausgestaltet und/oder hat eine größere Weite, insbesondere einen größeren Durchmesser, als der Haltevorsprung. Der Haltevorsprung umfasst beispielsweise eine Schraube oder einen Steckbolzen, der die Wand der Steckaufnahme oder des Steckvorsprungs durchdringt oder in diese Wand eindringt. Der Haltevorsprung ist beispielsweise durch Fixiermittel, insbesondere Klebstoff, Lack oder dergleichen, ortsfest, insbesondere zugfest und/oder schubfest und/oder drehfest, an der Wand der Steckaufnahme oder des Steckvorsprungs festgelegt. Wenn also beispielsweise eine Schraube in die Wand eingeschraubt ist, wird sie durch die Fixiermittel ortsfest festgelegt, so dass sie unverlierbar ist.

Der Steckvorsprung oder die Steckaufnahme umfassen beispielsweise einen Rohrabschnitt, zum Beispiel einen runden Rohrabschnitt, einen polygonalen oder dergleichen, wobei die Fahrzeug-Kontakteinheit oder die Lastenträger-Kontakteinheit an einem Innenumfang des jeweiligen Rohr Rohrabschnitt dichtend anliegen und diesen im Querschnitt, z.B. stirnseitig, verschließen. Somit wird also beispielsweise der von der Kontakteinheit abgewandte Bereich des Rohrabschnitt des durch die jeweilige Kontakteinheit vor Umwelteinflüssen geschützt.

Die Kontakteinheiten können beispielsweise mit einer Dichtungsanordnung oder einer Dichtung, insbesondere einer Ringdichtung, versehen sein. Die Dichtungsanordnung oder die (Ring-)Dichtung liegt einem Innenumfang des jeweiligen Rohrabschnitts an.

Bevorzugt ist ein Reibschluss-Befestigungskonzept: die Befestigungsmittel umfassen zweckmäßigerweise mindestens eine, beispielsweise durch die Dichtung gebildete oder als Dichtung ausgestaltete, Reibschlussfläche zum reibschlüssigen Halt der Fahrzeug-Kontakteinheit an der Fahrzeug-Halterung und/oder der Lastenträger-Kontakteinheit an dem Befestigungsarm mit einem Spiel längs und/oder quer zu der Steckachse. Beispielsweise liegt die jeweilige Kontakteinheit mit der Reibschlussfläche am Steckvorsprung oder der Steckaufnahme, insbesondere deren jeweiligen Innenumfang, an. Selbstverständlich könnte auch beispielsweise ein Gehäuse der Kontakteinheit, der Kontaktträger oder eine sonstige Komponente mit beispielsweise einer reibschlüssigen Beschichtung versehen sein oder aus einem reibschlüssigen Material, zumindest abschnittsweise, bestehen. Die Fahrzeug-Kontakte und/oder die Lastenträger-Kontakte sind zweckmäßigerweise mittels eines elastischen Körpers mit einem Spiel längs und/oder quer zu der Steckachse aufgenommen. Der elastische Körper kann beispielsweise ein Kontaktträger sein, der die einzelnen Kontakte (Steckkontakte oder Steckbuchsen), trägt. Der Kontaktträger besteht beispielsweise aus Gummi oder einem elastischen Kunststoff. Bevorzugt wird der elastische Körper von einer Dichtung gebildet, die die jeweilige Kontakteinheit umgibt.

Weiterhin ist es vorteilhaft, wenn die jeweilige Kontakteinheit durch eine Federanordnung, zum Beispiel mindestens eine Schraubenfeder, ein Tellerfederpaket, einen Federpufferkörper oder dergleichen, zur jeweils anderen Kontakteinheit und/oder in Richtung einer Mittelposition quer zur Steckachse belastet ist. Die Federanordnung ist nachgiebig, wenn die eine Kontakteinheit in die andere Kontakteinheit eingesteckt wird.

Auch ein Klemmkonzept ist möglich, mit dem die Fahrzeug-Kontakteinheit oder die Lastenträger-Kontakteinheit am sie jeweils haltenden Bauteil, zum Beispiel der Fahrzeug-Halterung oder dem Befestigungsarm, befestigbar sind. Beispielsweise dienen die Klemmmittel zum Verklemmen in der Steckaufnahme oder dem Steckvorsprung. Jedenfalls ist es vorteilhaft, wenn die Klemmmittel ein Spiel der jeweiligen Kontakteinheit relativ zum sie haltenden Bauteil (Fahrzeug-Halterung oder Befestigungsarm) längs und/oder quer zu der Steckachse ermöglichen.

Die Klemmmittel umfassen beispielsweise einen Klemmvorsprung, der eine am Außenumfang der Fahrzeug-Kontakteinheit oder der Lastenträger-Kontakteinheit angeordnete Dichtung oder die Stützfläche in Richtung eines Innenumfangs der Steckaufnahme oder des Steckvorsprung belastet.

Weiterhin kann zumindest ein Teil des Spiels der Kontakte längs und/oder quer zu der Steckachse auch durch Rastmittel erzielt werden: die Befestigungsmittel umfassen zweckmäßigerweise Rastmittel zum Verrasten der jeweiligen Kontakteinheit am haltenden Bauteil (Fahrzeug-Halterung oder Befestigungsarm), beispielsweise der Steckaufnahme oder dem Steckvorsprung mit zumindest einem Teil dieses Bewegungsspiels. Beispielsweise rastet ein Rastvorsprung am einen Bauteil in eine Rastaufnahme am andern Bauteil, insbesondere innen an der Steckaufnahme oder am Steckvorsprung, mit einem Bewegungsspiel längs und/oder quer zu der Steckachse ein.

In Verbindung mit dem vorgenannten Klemmkonzept und/oder dem Reibschluss-Konzept ist also durch den Halt mittels des Haltevorsprungs oder der Verrastung ein relativ fester Halt der jeweiligen Kontakte am Befestigungsarm oder der Fahrzeug-Halterung möglich, wobei dennoch das erfindungsgemäße Spiel längs und/oder quer zu der Steckachse erzielbar ist.

Ein an sich eigenständiges Konzept, bei dem es nicht unbedingt auf den an sich vorteilhaften Spielausgleich der Kontakte relativ zueinander ankommt, stellt es dar, wenn eine Kontakteinheit eines Lastenträgers oder einer Fahrzeug-Halterung, die elektrische und/oder optische Kontakte aufweist, die beim Anstecken eines Lastenträgers an das Fahrzeug bzw. die fahrzeugseitige Halterung , mit elektrischen und/oder optischen gegen-Kontakten in Verbindung treten, integral ein Steuergerät umfassen oder an einem Steuergerät angeordnet sind, das elektronische Komponenten und/oder einen Mikroprozessor und/oder einen Buskoppler zur Anbindung an einen Bus des Fahrzeugs oder des Lastenträgers oder auch zur Kommunikation zwischen dem Fahrzeug und dem Lastenträger umfasst. Das Steuergerät kann beispielsweise die Kommunikation mit einem Bordnetz des Fahrzeugs herstellen. Das Steuergerät kann aber auch zur Steuerung von Funktionen des Lastenträgers, zum Beispiel Ansteuerung von Leuchten, Abstandssensoren oder dergleichen, dienen.

Eine schwimmende Lagerung einer Kontakteinheit und/oder die Verwendung einer Kontakteinheit mit einem polygonalen Außenumfang in einem Innenraum einer Steckaufnahme oder eines Steckvorsprungs kann selbstverständlich auch bei einer Kupplung vorteilhaft sein, bei der ein Arm oder ein sonstiges Bauteil mit einem Steckvorsprung oder einer Steckaufnahme einer Anhängekupplung an der Fahrzeug-Halterung befestigt werden soll.

An dem Fahrzeug-Träger ist zweckmäßigerweise eine Kupplungsarm-Aufnahme oder ein Kupplungsarm-Lager für einen Kupplungsarm einer Anhängekupplung angeordnet. Mit dem Lager kann der Kupplungsarm beispielsweise schwenkbeweglich und/oder schiebebeweglich gelagert sein. Somit hat der Fahrzeug-Träger also eine Doppelfunktion: er trägt der Lastenträger und zusätzlich die Kupplungsarm-Aufnahme, somit also gegebenenfalls den Kupplungsarm, wenn eine Anhängekupplung benötigt wird.

Der Fahrzeug-Träger wird beispielsweise von einem Querträger gebildet oder umfasst einen solchen, wobei der Querträger an der Karosserie des Kraftfahrzeuges befestigbar ist.

Die Kupplung, insbesondere die Steckaufnahme und/oder der Steckvorsprung, umfassen beispielsweise ein Rastglied und/oder ein Sicherungsglied, mit denen das eine Kupplungsbauteil am anderen Kupplungsbauteil verrastbar ist, bzw. sicherbar. Bevorzugt ist dabei eine Art Vorverrastung, das zusätzlich zu dem Rastglied oder Sicherungsglied Spannmittel vorgesehen sind. Das Rastglied oder Sicherungsglied sorgt dafür, dass der Steckvorsprung an der Steckaufnahme gehalten wird, beispielsweise um anschließend ein Verspannen, beispielsweise mit den vorgenannten Zuganker oder sonstigen Sicherungsmaßnahmen, vorzunehmen. Das Sicherungsglied bildet eine zusätzliche Maßnahme, die nicht notwendig ist, aber vorteilhaft. Selbst wenn die Verspannung ausfällt, wirkt noch das Sicherungsglied, so dass der Lastenträger jedenfalls nicht verlorengeht.

Das Vorsehen eines zusätzlichen Rastgliedes und/oder Sicherungsglieds zusätzlich zu Spannmitteln bei der Befestigung eines Lastenträgers an einer Fahrzeug-Halterung stellt eine an sich eigenständige Erfindung dar. Auf die konkrete Ausgestaltung der Spannmittel wie später noch in der Zeichnung dargestellt, beispielsweise mittels einer Spannschraube, kommt es nicht an. Es können durchaus auch andere Spannmittel vorgesehen sein, beispielsweise ein Exzenterspannglied, das von außen her auf die Verbindung zwischen Steckvorsprung und Steckaufnahme wirkt, um die beiden Bauteile miteinander zu verspannen. Weiterhin könnte auch ein Spannanker vorgesehen sein, der in Richtung der Steckachse wirksam ist, das heißt nicht quer zu dieser verläuft.

Das Rastglied und/oder das Sicherungsglied umfassen beispielsweise ein Federelement, das einen Anschlagabschnitt aufweist, der zum Verrasten oder Sichern vorgesehen ist und in der Steckaufnahme, beispielsweise tangential, verläuft. Zusätzlich hat das im Bereich des Anschlagabschnitts zweckmäßigerweise stabförmige Federelement einen Betätigungsabschnitt, der seitlich vor die Steckaufnahme zur Betätigung des Federelements im Sinne eines Entrastens oder Entsicherns vorsteht. Somit kann also das Federelement ausgelenkt werden, so dass der Rasteingriff oder Sicherungseingriff des Anschlagabschnittes ausgehoben ist. Bevorzugt greift der Anschlagabschnitt formschlüssig in den Steckvorsprung bzw. einer dort angeordneten Rastaufnahme oder Sicherungsaufnahme, ein.

Bevorzugt bildet das Spannteil ein Rastglied oder umfasst ein Rastglied. Prinzipiell ist es also möglich, dass die Fixiermittel von denselben Komponenten gebildete Rastmittel und Spannmittel umfassen.

Die Steckaufnahme und der Steckvorsprung verlaufen zweckmäßigerweise bei üblichem Gebrauch etwa horizontal. Somit weist auch die Steckachse vorteilhaft einen horizontalen Verlauf auf. Der Bediener muss also bei dieser Ausführungsform den Lastenträger nicht etwa von oben nach unten oder schräg betätigen, um die Verbindung zum Kraftfahrzeug bzw. der Fahrzeug-Halterung herzustellen, sondern kann den Lastenträger horizontal führen. Dies ist besonders komfortabel. Allerdings ist festzuhalten, dass bezüglich des vorgenannten Rastkonzepts, Sicherungskonzepts oder auch der Spannmittel selbstverständlich auch eine schrägstehende oder vertikale Steckachse denkbar ist.

An dieser Stelle sei bemerkt, dass die Steckaufnahme und/oder der Steckvorsprung zweckmäßigerweise eine rohrartige Gestalt haben.

Das nachfolgend beschriebene Konzept stellt ebenfalls eine an sich eigenständige Erfindung dar. Es ist nicht nur bei der mittig an Kraftfahrzeugen zu befestigende Lastenträgern realisierbar, sondern auch bei beispielsweise gabelartige Befestigungsarme aufweisenden Lastenträgern, wie z.B. aus EP 1 757 488 A2 zweckmäßig. Bevorzugt ist das Konzept jedoch dann, wenn die Steckachse im Wesentlichen horizontal verläuft, wobei Schrägstellungen der Schwenkachse selbstverständlich auch denkbar sind, insbesondere dann, wenn sie nur wenig von der Horizontalen abweichen:
Die Steckaufnahme hat zweckmäßigerweise eine zu einer Querschnitt-Außenkontur des Steckvorsprungs passende Querschnitt-Innenkontur, wobei die Außenkontur oder die Innenkontur einen quer zur Steckachse vorstehenden Stützvorsprung, beispielsweise eine Außenecke, eine Nut oder dergleichen, zum Eingriff in eine quer zur Steckachse verlaufende Stütz-Aufnahme, insbesondere eine Innenecke, der Innenkontur oder der Außenkontur aufweist. Der Stützvorsprung und die Stütz-Aufnahme sind zweckmäßigerweise eckig, das heißt sie haben zueinander winkelige Seitenwände. Die Stützaufnahme stützt den Stützvorsprung oder der Stützvorsprung stützt die Stützaufnahme zweckmäßigerweise in vertikaler Richtung. Somit lagert also das jeweilige Bauteil mit seinem Vorsprung beispielsweise in der Aufnahme auf.

Ein Boden der Aufnahme ist beispielsweise beim Gebrauch des Lastenträger-Systems näher bei einem Untergrund als die Öffnungsseite der Aufnahme.

Beispielsweise ist die Innenkontur rautenförmig oder quadratisch. Dasselbe gilt zweckmäßigerweise auch für die Außenkontur. Der Stützvorsprung und die Stütz-Aufnahme bilden zweckmäßigerweise untere, stützende Eckbereiche eines Dreieckes oder Viereckes. Somit steht der Steckvorsprung quasi auf einer Ecke.

Die Lagerung des Steckvorsprungs in der Steckaufnahme auf dem Stützvorsprung bzw. der Stütz-Aufnahme in vertikaler Richtung hat den Vorteil, dass insbesondere in vertikaler Richtung eine optimale Abstützung möglich ist. In Fahrzeugquerrichtung wirkende Kräfte sind vergleichsweise gering, so dass insbesondere in vertikaler Richtung kein oder nur ein geringes Spiel zwischen den Bauteilen vorhanden ist.

Dies hat beispielsweise Vorteile in Bezug auf verschiedene Spannkonzepte, unter anderem dem vorher erläuterten Spannkonzept mittels eines schräg zur Steckachse verlaufenden Spannankers.

Es versteht sich, dass der Steckvorsprung und die Steckaufnahme selbstverständlich auch rund oder gerundet sein können.

Der Spannanker verläuft zweckmäßigerweise von oben nach unten, das heißt schräg zur Horizontalen. Weiterhin ist es vorteilhaft, wenn der Spannanker in einer von der Fahrzeuglängsachse durchsetzten oder zu dieser parallelen Vertikalebene verläuft.

Bevorzugt sind die Fixiermittel mit einem Schloss versehen, dass beispielsweise am Spannglied angeordnet ist. Mit dem Schloss in die Fixiermittel Intel der Fixierstellung oder der Lösestellung oder beiden Stellungen verschließbar.

Ein weiteres Befestigungskonzept, das mit dem vorstehenden und nachfolgenden Ausführungsformen zweckmäßig ist, aber auch mit anderen Ausführungsformen, die in der Anmeldung nicht im Einzelnen erläutert sind, kombinierbar ist, sieht vor, dass die Fixiermittel zweckmäßigerweise eine Überwurfhülse umfassen, die an der mindestens einen Fahrzeug-Halterung oder dem mindestens einen Befestigungsarm beweglich, beispielsweise drehbar und/oder verschieblich, gelagert ist. Die Überwurfhülse steht vor ein freies Ende der Fahrzeug-Halterung oder des Befestigungsarms vor und weist an ihrem Innenumfang Formschlusskonturen auf, die mit Gegen-Formschlusskonturen an einem Außenumfang des jeweils anderen Bauteils, des Befestigungsarms oder der mindestens einen Fahrzeug-Halterung, in Eingriff bringbar sind. Zur Hülse ist festzuhalten, dass diese zweckmäßigerweise eine ringartige Gestalt haben kann, aber auch eine teilringartige.

Die Formschlusskonturen und die Gegenformschlusskonturen umfassen beispielsweise ein Gewinde. Es ist aber auch möglich, dass beispielsweise Bajonett-Vorsprünge und zu diesen passende Bajonett-Aufnahmen vorhanden sind.

Beispielsweise bildet die Überwurfhülse das Spannglied und dient zur Betätigung eines Spannteils. Das Spannteil kann beispielsweise von Formschlusskonturen. insbesondere Bajonettkonturen, Schraubenkonturen oder dergleichen, gebildet sein oder solche aufweisen. Insbesondere ist auch das Spannteil an der Überwurfhülse angeordnet, z.B. durch die Schraubenkonturen gebildet.

Auch die nachfolgenden Maßnahmen stellen an sich ein eigenständiges Erfindungskonzept dar. Bevorzugt umfasst das Lastenträger-System nämlich einen Kennzeichen-Träger zum Tragen des Kennzeichens, wobei der Kennzeichen-Träger und/oder das Kennzeichen in einer Abdeckstellung die mindestens eine Fahrzeug-Halterung verdecken, z.B. verschließen, und in einer Freigabestellung die mindestens eine Fahrzeug-Halterung für eine Montage des Lastenträgers, beispielsweise des mindestens einen Befestigungsarms, freigeben.

Der Kennzeichen-Träger umfasst beispielsweise ein Träger-Lager, mit dem der Kennzeichen-Träger zwischen der Abdeckstellung und der Freigabestellung verstellbar, z.B. schwenkbar und/oder verschieblich ist, oder vom Fahrzeug entfernbar ist.

Nachfolgend werden Ausführungsbeispiele der Erfindung anhand der Zeichnung erläutert. Es zeigen:
- Figur 1: ein erstes Ausführungsbeispiel eines Lastenträger-Systems, bei dem der Lastenträger noch vom Kraftfahrzeug entfernt ist, wobei der Lastenträger in
- Figur 2: am Kraftfahrzeug montiert ist,
- Figur 3: ein Detail Z aus Figur 2,

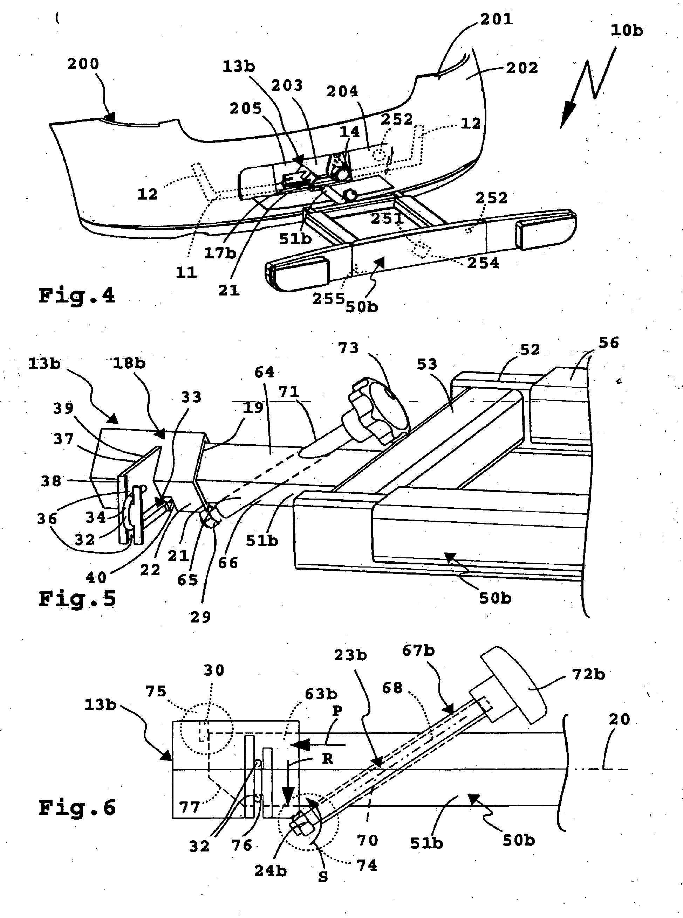

- Figur 4: ein Lastenträger-System mit einem noch von der Fahrzeug-Halterung entfernten Lastenträger,
- Figur 5: eine perspektivische Seiten-Schrägansicht der Fahrzeug-Halterung und des Lastenträgers im aneinander montierten Zustand,
- Figur 6: eine Seitenansicht der in Figur 5 dargestellten Verbindung,
- Figur 7: eine Ansicht eines Lastenträgers etwa vom Kraftfahrzeug her gesehen, wobei am Befestigungsarm des Lastenträgers elektrische Kontakte angeordnet sind, die in eine in
- Figur 8: dargestellte Fahrzeug-Halterung mit ebenfalls elektrischen Kontakten einsteckbar ist,
- Figur 9: eine Fahrzeug-Halterung eines dritten erfindungsgemäßen Lastenträger-Systems quasi vom Kraftfahrzeug innen nach hinten gesehen, so dass eine zusätzlich vorhandene Halterung für einen Kupplungsarm einer Anhängekupplung sichtbar ist,

- Figur 10: eine Variante des Ausführungsbeispiels gemäß Figur 9, jedoch mit einer vertikal verlaufenden Aufnahmehülse für eine Kugelstange einer Anhängekupplung,
- Figur 11: das Lastenträger-System ähnlich wie in Figuren 9, 10, jedoch ohne Anhängekupplung und mit einem Lastenträger, der noch von der Fahrzeug-Halterung entfernt ist,
- Figur 12a: den Lastenträger gemäß Figur 11 schräg vom Fahrzeug her gesehen mit der Fahrzeug-Halterung, die im noch nicht montierten Zustand dargestellt ist, wobei der montierte Zustand in
- Figur 12b: sichtbar ist,
- Figur 13: ein viertes Ausführungsbeispiel eines Lastenträgers-Systems,
- Figur 14: eine Detailansicht des Systems gemäß Figur 13 schräg vom Fahrzeug her gesehen, wobei die Fahrzeug-Halterung und der Befestigungsarm des Lastenträgers entfernt sind,
- Figur 15: eine Seitenansicht der Verbindung zwischen Lastenträger und Fahrzeug-Halterung, wobei innenliegende Komponenten gestrichelt dargestellt sind,

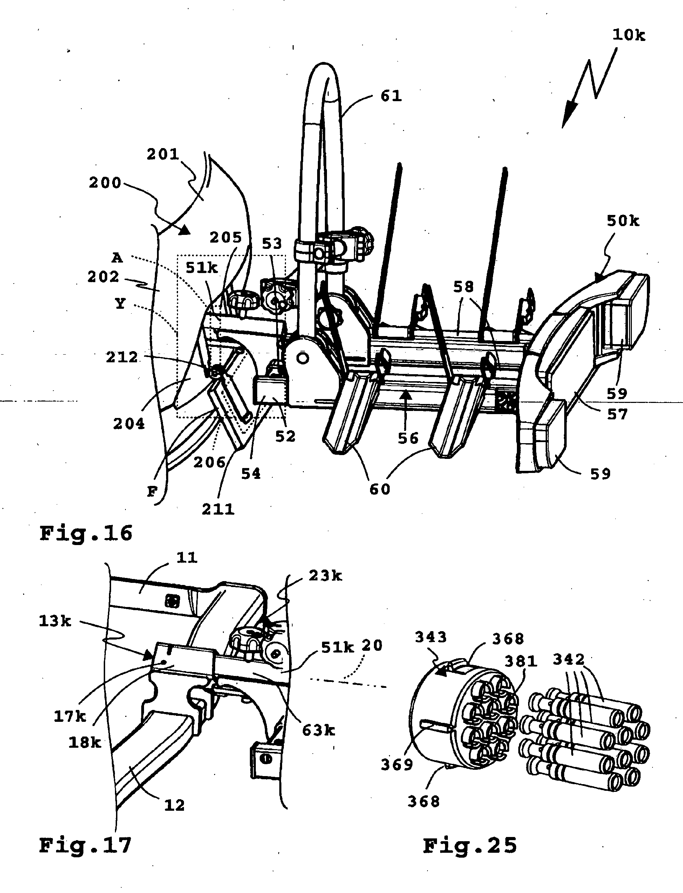

- Figur 16: ein weiteres Ausführungsbeispiel eines erfindungsgemäßen Lasten-Träger Systems im an einem Fahrzeug montierten Zustand,

- Figur 17: einen Ausschnitt Y aus Figur 17, wobei das Fahrzeug nicht dargestellt ist,
- Figur 18: eine Ansicht ähnlich wie Figur 17, jedoch mit einem von der Fahrzeug-Halterung entfernten, teilweise dargestellten Lastenträger

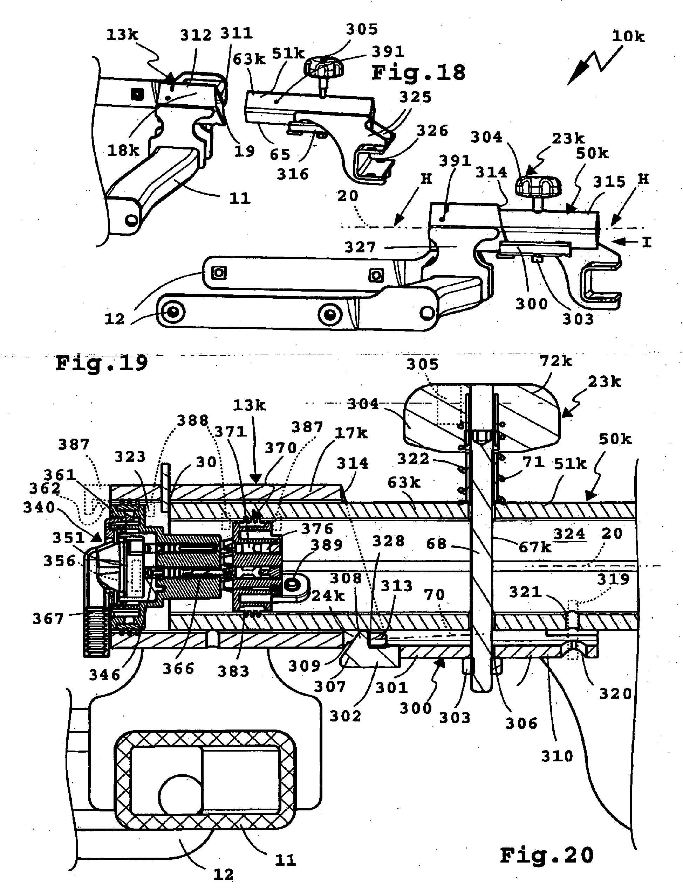

- Figur 19: eine Ansicht ähnlich wie Figur 18, wobei der Lastenträger an der Fahrzeug-Halterung montiert ist,
- Figur 20: einen Querschnitt entlang einer Schnittlinie H-H aus Figur 19,

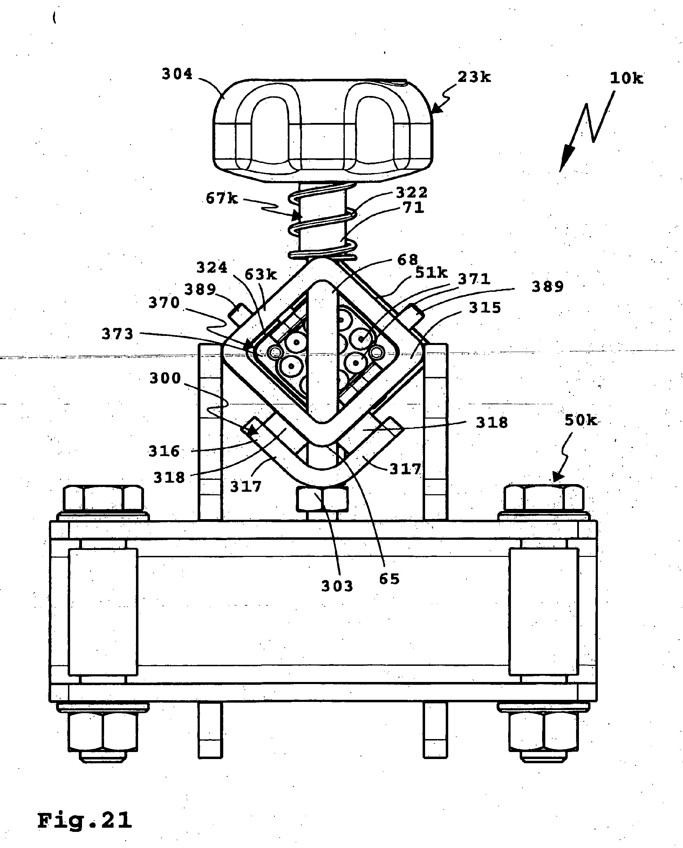

- Figur 21: eine hintere Ansicht entsprechend einem Pfeil I in Figur 19,
- Figur 22: eine Explosionsdarstellung einer fahrzeugseitigen Kontakteinheit und
- Figur 23: eine Explosionsdarstellung einer lastenträgerseitigen Kontakteinheit der Lastenträger-Kupplung gemäß Figuren 19 - 21,
- Figur 24: die Kontakteinheiten gemäß Figuren 22, 23 im ineinander gesteckten Zustand, und
- Figur 25: einen Kontaktträger und Steckbuchsen der fahrzeugseitigen Kontakteinheit gemäß Figur 19.

Bei den in der Zeichnung dargestellten Lastenträger-Systemen 10a, 10b, 10c, 10d und 10k sind zahlreiche Innovationen dargestellt, die einzeln oder in Kombination miteinander verwirklicht werden können. Gleiche oder gleichartige Komponenten haben dieselbe Bezugszahl, die jedoch zur Verdeutlichung von Unterschieden teilweise mit a, b, c, d und k bei den einzelnen Lastenträger-Systemen 10a - 10k gekennzeichnet sind.

Das Lastenträger-System 10a -10d, -10k umfasst eine Fahrzeug-Halterung 13a -13d, 13k, die an einem Fahrzeug-Träger 11 zur Befestigung mit einer Karosserie eines Kraftfahrzeuges 200 verbunden sind, beispielsweise angeschraubt, angeschweißt oder auch einstückig ausgebildet sind. Der Fahrzeug-Träger 11 ist beispielsweise ein Querrohr oder ein sonstiger Querträger, der hinter dem heckseitigen Abschluss der Karosserie des Kraftfahrzeuges 200 verläuft und beispielsweise mittels seitlicher Verbindungsteile 12, zum Beispiel Laschen, schwertartigen Vorsprüngen oder dergleichen, mit der nicht im einzelnen dargestellten Karosserie des Kraftfahrzeuges 200 verbunden ist. Jedenfalls befindet sich der Fahrzeug-Träger 11 am Heck 201 des Kraftfahrzeugs 200 und ist zweckmäßigerweise hinter einem Stoßfänger 202 des Kraftfahrzeuges 200 verborgen. Der Fahrzeug-Träger 11 kann beispielsweise bei einem Aufprall von hinten auf das Kraftfahrzeug 200 Kräfte abfangen und somit die Wirkung des Stoßfängers 202 unterstützen.

Der Stoßfänger 202 ist in einigen Figuren nur teilweise dargestellt. Der Stoßfänger 202 verdeckt zweckmäßigerweise den Fahrzeug-Träger 11 vollständig. Dennoch ist es möglich, wie nachfolgend noch deutlicher wird, den Lastenträger 50a - 50d, 50k von horizontal hinten her an der Fahrzeug-Halterung 13a -13d, 13k zu befestigen. Dazu muss nur ein Befestigungsarm 51a- 51d, 51k an der Fahrzeug-Halterung 13a -13d, 13k befestigt werden, wobei es zweckmäßig ist, dass bei jedem der Lastenträger-Systeme 10a-10d, 10k nur eine einzige Kombination aus Fahrzeug-Halterung und Befestigungsarme miteinander zu verbinden ist, d.h. dass jeder der Lastenträger 50a - 50d, 50k nur einen einzigen Befestigungsarm 51a - 51d, 51k aufweist. Dabei ist zu bemerken, dass im Prinzip mehrere, insbesondere nahe beieinander liegende Befestigungsarme und zugehörige Fahrzeug-Halterungen möglich wären, beispielsweise um die Stütz- und Tragekräfte zu verteilen. Der Lastenträger 50a - 50d, 50k ist in der dargestellten Ausführungsform nur exemplarisch zu verstehen. Beispielsweise hat er einen Grundträger 52, der eine U-förmige Gestalt hat. Von einem Querträger 53 stehen zwei Längsträger 54 winkelig, beispielsweise rechtwinkelig ab. Vom Querträger 53 steht weiterhin der Befestigungsarm 51a-51d, 51k ab, jedoch zu den Längsträgern 54 entgegengesetzt.

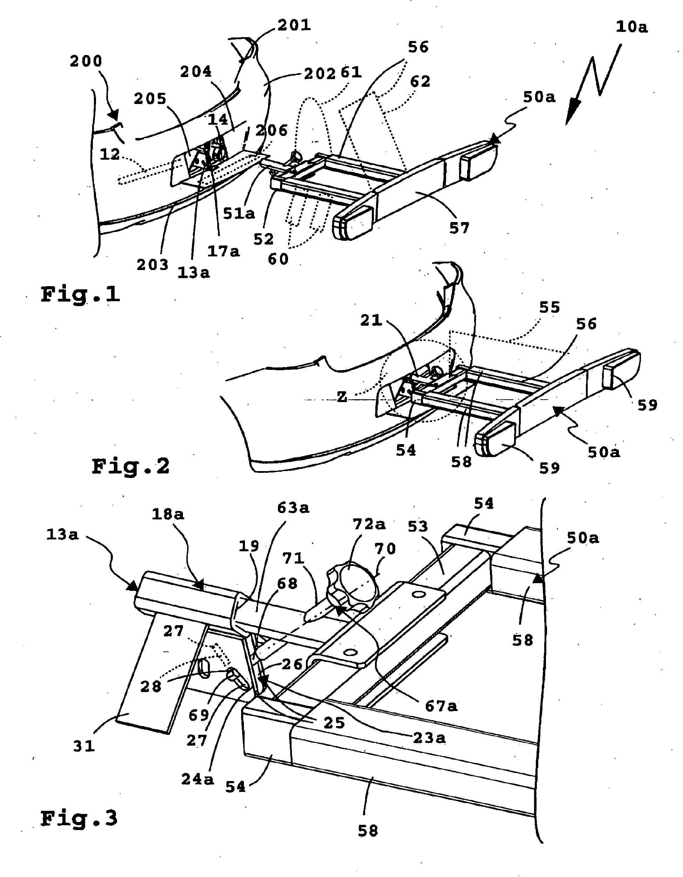

Der Befestigungsarm 51a-51d, 51k ist beispielsweise mit dem Grundträger 52 verschweißt, verschraubt oder kann auch einstückig mit diesem sein. Der Befestigungsarm 51a - 51d, 51k ist vorteilhaft im Bereich einer Quermitte des Lastenträgers 50a - 50d, 50k angeordnet. Beispielsweise befindet sich der Befestigungsarm 51a - 51d, 51k etwa in der Längsmitte des Querträgers 53. Es ist zu bemerken, dass selbstverständlich auch asymmetrische Konstruktionen denkbar sind. Weiterhin ist es nicht notwendig, dass die Längsträger 54 und der Befestigungsarm 51a - 51d, 51k parallel zueinander sind. Beispielsweise könnten die Längsträger 54 V-förmig verlaufen. Weiterhin ist es auch möglich, dass der mindestens eine Befestigungsarm und eine Tragoberfläche des Lastenträgers, insbesondere dessen Traggestell oder Grundgestell, auf derselben Horizontal-Höhe verlaufen. In Figur 2 ist beispielsweise eine Stufe 55 angedeutet, an der dies deutlich wird. Beispielsweise kann die eigentliche Tragfläche des Lastenträgers, die zum Auflegen einer Last vorgesehen ist, weiter von einem Untergrund entfernt sein, zum Beispiel einer Fahrbahn, als der jeweilige Befestigungsarm, oder auch weniger weit, d.h. mehr beim Untergrund sein, was jedoch nicht dargestellt ist. In beiden Fällen gilt dieser Zustand dann, wenn der Lastenträger am Kraftfahrzeug montiert ist.

An dem Grundträger ist ein Lastenaufsatz 56 mit einem Querträger 57 sowie Längsträgern 58 angeordnet, die insgesamt ebenfalls ein U aufweisen, das jedoch gegensinnig zum Gestell bzw. "U" des Grundträgers 52 orientiert ist. Von dem Querträger 57 stehen seitlich Leuchten 59 ab. Die Leuchten 59 können schwenkbeweglich sein, so dass sie beispielsweise zu den Längsträgern 58 hin geschwenkt werden können, wenn der Lastenträger 50a - 50d, 50k nicht gebraucht wird. Am Lastenaufsatz 56 können Stützkomponenten und Tragkomponenten angeordnet sein, die eine zu transportierende Last stützen oder tragen. Exemplarisch ist beispielsweise eine Stütze 61 dargestellt, die von den Längsträgern 58 winkelig, zum Beispiel rechtwinkelig absteht, wenn sie gebraucht wird. Die Stütze 61, beispielsweise ein U-Bügel, kann zu den Längsträgern 58 zweckmäßigerweise hin geschwenkt werden (bei Nichtgebrauch). Weiterhin sind Tragelemente 60, beispielsweise Rinnen, Tragplattformen oder dergleichen am Lastenaufsatz 56 angeordnet, beispielsweise schwenkbar an den Längsträgern 58.

Der Grundträger 52 oder Lastenaufsatz 56 stellt einen Tragbereich zum Tragen einer Last bereit.

Ein weiteres, nicht detailliert dargestelltes Komfortmerkmal stellt dar, dass der Lastenaufsatz 56 bezüglich des Grundträgers 52 beweglich gelagert ist, beispielsweise schwenkbeweglich, so dass er in eine in Figur 1 angedeutete Ladestellung 62 vom Heck 201 des Kraftfahrzeugs 200 weg schwenkbar ist. Aber auch eine insbesondere teleskopartige Schiebebewegung ist möglich, beispielsweise dadurch, dass die Längsträger 58 auf den Längsträgern 54 schiebebeweglich gelagert sind. Die (unteren) Längsträger 54 stützen die (oberen) Längsträger 58 ab, d.h. die Längsträger 58 liegen zumindest beim Fahrbetrieb des Kraftfahrzeuges 200 bzw. des Lastenträgers 50a - 50d, 50k auf den Längsträgern 54 auf. Es versteht sich, dass die vorstehende Ausführungsform des Lastenträgers 50a - 50d, 50k lediglich exemplarisch zu verstehen sind, so dass beispielsweise wahlweise Fahrräder, eine Transportbox, Skier oder auch andere Gegenstände, Surfbretter oder dergleichen, auf dem Lastenträger 50a - 50d, 50k transportierbar sind.

Die nachfolgend im Detail beschriebenen Befestigungskonzepte der Lastenträger 50a - 50d, 50k am Kraftfahrzeug 200, d.h. an den Fahrzeug-Halterungen 13a - 13d, 13k sind zudem bei einfachem Aufbau leicht handhabbar, so dass es durchaus denkbar ist, am Kraftfahrzeug 200 unterschiedlich ausgebaute, d.h. zum Tragen unterschiedlichster Lasten vorgesehene verschiedene Lastenträger zu verwenden. In jedem Fall ist die Anwendung ästhetisch sehr ansprechend, da man nämlich am Kraftfahrzeug 10 bei entferntem Lastenträger 50a - 50d, 50k keine störenden, die Fahrzeugoptik beeinträchtigenden Komponenten sieht. Die Fahrzeug-Halterungen 13a -13d, 13k sind nämlich hinter dem Stoßfänger 202 etwa im Bereich einer Quermitte 203 des Kraftfahrzeuges 200 angeordnet, so dass nicht nur eine zentrale, eine gleichmäßige Belastung einer Grundstruktur des Kraftfahrzeuges 10 darstellende Anbindung oder Abstützung eines Lastenträgers an einem Kraftfahrzeug gewährleistet ist, sondern auch eine optisch optimierte Anbindung.

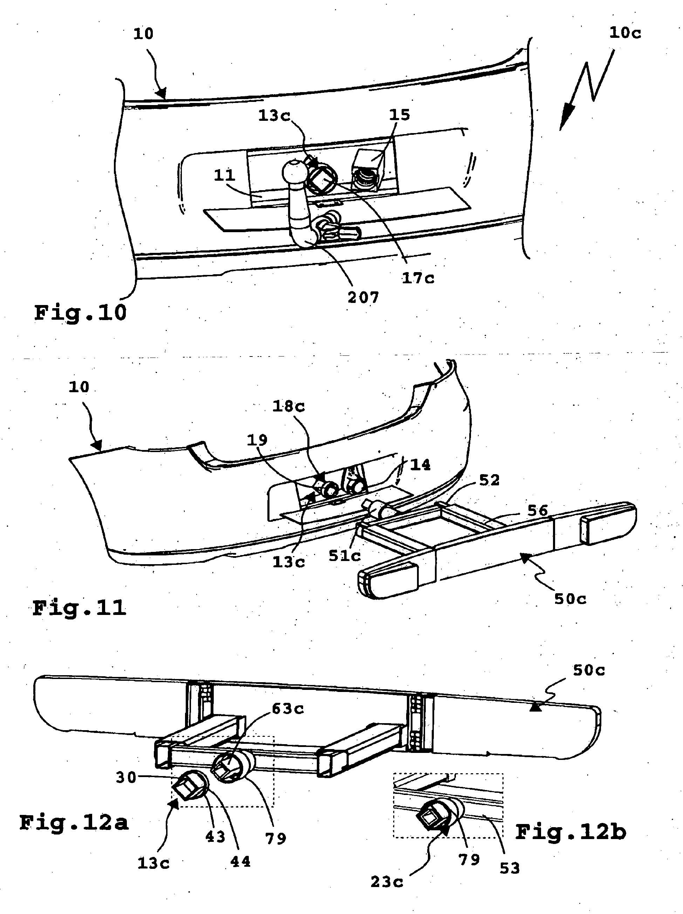

Im Bereich der Quermitte 203 hat der Stoßfänger 202 eine Vertiefung oder einen Ausschnitt 204, der zur Anbringung eines Kennzeichens 206 vorgesehen ist. Im Bereich der Vertiefung bzw. des Ausschnitts 204 befinden sich ein Ausschnitt 205 oder eine Ausschnittanordnung, da nämlich auch mehrere, insbesondere kleinere Ausschnitte vorgesehen sein können, z.B. für die Fahrzeug-Halterung 13a - 13d, 13k, gegebenenfalls auch für beispielsweise weitere Komponenten, z.B. elektrische Kontakte 14, zum Beispiel eine Steckdose, und/oder eine Kupplungsarm-Aufnahme 15 (Figur 10).

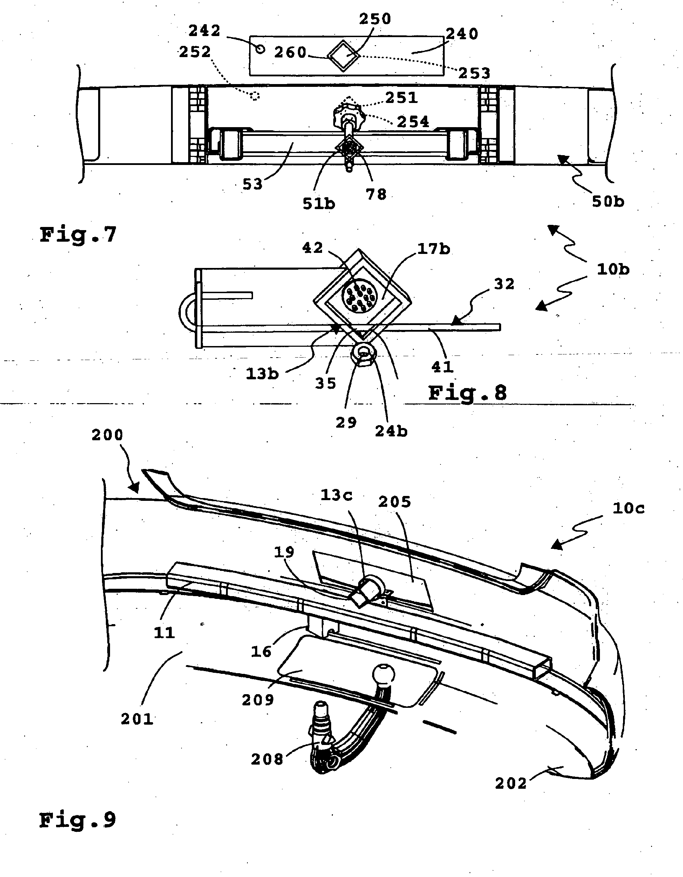

Die elektrischen Kontakte 14 sowie die Kupplungsarm-Aufnahme 15 sind zweckmäßigerweise an dem Fahrzeug-Träger 11 befestigt, beispielsweise verschraubt oder verschweißt, so dass dieser als Ganzes, d.h. einschließlich der Fahrzeug-Halterung 13a -13d, 13k als Modul am insoweit vormontierten Kraftfahrzeug 200 befestigt werden kann. Die Kupplungsarm-Aufnahme 15 umfasst ebenso wie eine Kupplungsarm-Aufnahme 16 (Figur 9) beispielsweise eine Steckhülse, in die ein Steckende eines Kupplungsarmes 207, 208 einsteckbar ist. Während die Steckaufnahme der Kupplungsarm-Aufnahme 15 im Wesentlichen horizontal verläuft, ist die Steckaufnahme der Kupplungsarm-Aufnahme 16 im Wesentlichen vertikal orientiert, d.h. sie ist beispielsweise nach unten, zur Fahrbahnoberfläche oder zum Untergrund hin, offen. Das Steckende des Kupplungsarmes 208 wird beispielsweise durch eine Öffnung 209 an einem unteren, im Wesentlichen horizontal verlaufenden Abschnitt des Stoßfängers 202 hindurch gesteckt. Bei der Anordnung gemäß Figur 9 ist also zusätzlich eine Öffnung 209 oder ein Ausschnitt am Stoßfänger erforderlich, insbesondere mit dieser etwa in der Art einer Schürze nach unten in Richtung nach Fahrtrichtung vorn verlängert ist. Bei dem in Figur 10 dargestellten Konzept hingegen ist die Kupplungsarm-Aufnahme 15 quasi hinter dem Kennzeichen 206 verborgen, wenn dieses den Ausschnitt 205 oder die Ausschnittanordnung verdeckt.

An dieser Stelle sei noch auf einen Unterschied hingewiesen, nämlich dass zur Fixierung von Kupplungsarmen und erfindungsgemäßen Lastenträgern unterschiedliche Befestigungs- und Fixiersysteme, aber auch unterschiedliche elektrische Verbindungs-Konzepte vorteilhaft sind, d.h. dass man zweckmäßigerweise wie beim Ausführungsbeispiel separate, zur Aufnahme oder zum schwenkenden Lagern von Kupplungsarmen vorgesehene Halterungen oder Lager vorsieht, während für die Lastenträger dafür speziell geeignete Fahrzeug-Halterungen bzw. Fixiermittel vorgesehen sind, so dass an die jeweiligen Gegebenheiten, beispielsweise Belastbarkeit oder Handhabbarkeit optimal ausgestaltetes Systeme möglich sind.

Weiterhin ist es vorteilhaft, wenn die Kupplungsarm-Aufnahmen 15 und 16 etwas außerhalb der Quermitte 203 angeordnet sind. Die Kupplungsarme 207, 208 haben im Bereich ihrer Kugelstangen dazu angepasste Verläufe bzw. Geometrien, so dass die Kupplungskugel sich bei an der Kupplungsarm-Aufnahme 15, 16 montiertem Kupplungsarm 207, 208 etwa im Bereich der Quermitte 203 des Kraftfahrzeuges 200 befindet. Die Kupplungskugel ist dann quasi quer mittig direkt hinter der Fahrzeug-Halterung 13a -13d, 13k angeordnet.

Ein alternatives Konzept kann natürlich auch vorsehen, dass für einen Kupplungsarm und für einen Lastenträger ein und dieselben Befestigungsmittel verwendet werden, beispielsweise in der Ausgestaltung, die nachfolgend noch detailliert erläutert wird.

Das Kennzeichen 206 ist an einem Kennzeichen-Träger 210 befestigt. Der Kennzeichen-Träger 210 umfasst beispielsweise eine Platte, ein Traggestell oder dergleichen, sowie zweckmäßigerweise eine nicht im Detail dargestellte Halterung oder Halteelemente für das Kennzeichen 206. Beispielsweise sind rahmenartige oder steckartige Haltemittel vorhanden, mit denen das Kennzeichen 206 am Kennzeichen-Träger 210 befestigbar ist. Es ist aber auch möglich, dass das Kennzeichen 206 an dem Kennzeichen-Träger 210, beispielsweise der Trägerplatte 211 oder einem Rahmen, verschraubt ist.

Die Trägerplatte 211, somit also der Kennzeichen-Träger 210, ist mittels eines Träger-Lagers 212 schwenkbar zwischen einer Freigabestellung F, die für eine Montage des Lastenträger 50a - 50d, 50k die Fahrzeug-Halterung 13a -13d, 13k freigibt, und einer Abdeckstellung A verstellbar, in der er die Fahrzeug-Halterung 13a -13d, 13k verdeckt. Das Träger-Lager 212 ist beispielsweise ein Schwenklager, so dass der Kennzeichen-Träger 210 und /oder das Kennzeichen 206 zwischen einer im Wesentlichen vertikalen Stellung (Abdeckstellung A) und einer dazu winkeligen, beispielsweise horizontalen Stellung (Freigabestellung F) verschwenkbar sind. Beim Ausführungsbeispiel schwenkt der Kennzeichen-Träger 210 in die Freigabestellung F nach unten, so dass der Befestigungsarm 51a - 51d, 51k oberhalb des Kennzeichen-Trägers 210 montierbar ist. Ein Schwenken nach oben ist allerdings auch möglich.

Für einen sicheren Halt des Kennzeichen-Trägers 210 können beispielsweise auch Rastmittel vorgesehen sein, die beispielsweise einen Rastvorsprung am Kennzeichen-Träger 210 umfassen, der in einer korrespondierende Rastaufnahme am Stoßfänger 202 einrastet.

An dem Träger-Lager 212 könnte auch eine Feder, z.B. eine Schenkelfeder, vorgesehen sein, die die Trägerplatte oder ein sonstiges, das Kennzeichen 206 haltendes Bauteil, in die Abdeckstellung A oder die Freigabestellung F beaufschlagt.

Eine sozusagen bidirektionale Beaufschlagung in die Abdeckstellung und die Freigabestellung oder ein Halt in beiden Stellungen könnte über einen Totpunktmechanismus, mit oder ohne Feder, erfolgen.

An dieser Stelle sei bemerkt, dass eine solche Modularität bzw. modulare Bauweise des Lastenträger-Systems gemäß der Erfindung vorgesehen sein kann, dass bis auf das Vorsehen eines ausreichend großen Ausschnittes im Bereich der Kennzeichen-Montagefläche am Kraftfahrzeug keine weiteren Maßnahmen erforderlich sind. Beispielsweise können die magnetischen Haltemittel 213 mit ferromagnetischen Bereichen an der Fahrzeug-Halterung 13a -13d, 13k zusammenwirken. Ferner können auch an der Fahrzeug-Halterung 13a -13d, 13k Rastmittel, zum Beispiel Rastvorsprünge oder Rastaufnahmen, vorgesehen sein, die direkt mit den zugehörigen Rastmitteln am Kennzeichen-Träger 210 zusammenwirken.

Des Weiteren ist zu bemerken, dass selbstverständlich auch das Träger-Lager 212 nicht unmittelbar am Stoßfänger 202 befestigt sein müsste, beispielsweise an einer der nachfolgend beschriebenen Fahrzeug-Halterungen 13a -13d, 13k befestigt sein kann. Dies gilt übrigens auch für die nachfolgend noch beschriebenen weiteren Varianten von erfindungsgemäßen Kennzeichen-Trägern, deren Lager, Rastmittel, Steckmittel und dergleichen mehr direkt mit korrespondierenden Gegenmitteln am Fahrzeug-Halter zusammenwirken können:
Anstelle der Trägerplatten kann auch ein Rahmen oder ein sonstiges Haltebauteil für das Kennzeichen 206 vorgesehen sein.

Vorteilhaft ist an der Trägerplatte 241 ein Steckvorsprung 250 vorgesehen, der zur Fahrzeug-Halterung 13a oder 13b passt. Der Steckvorsprung steht beispielsweise an der vom Kennzeichen 206 abgewandten Seite von der Trägerplatte 241 ab und ist in eine korrespondierende Steckaufnahme einsteckbar. Am Lastenträger 50a oder 50b kann beispielsweise eine Steckaufnahme 251 vorgesehen sein, in die der Steckvorsprung 250 passt. Beispielsweise weist der Querträger 57 eine solche Steckaufnahme 251 auf. Die Steckaufnahme 251 fluchtet vorteilhaft im Wesentlichen mit der Fahrzeug-Halterung 13a oder 13b, so dass das Kennzeichen 206 quer mittig am Lastenträger 50a oder 50b befestigbar ist. Dies hat unter anderem den Vorteil, dass nur ein einziges Kennzeichen 206 benötigt wird und dieses zudem auch stets optimal lesbar am Kraftfahrzeug 200 oder am Lastenträger 50a, 50b angeordnet sein kann. Der Steckvorsprung 250 bildet einen Bestandteil von Kennzeichen-Befestigungsmittel 253. Die Steckaufnahme 251 bildet einen Bestandteil von Lastenträger-Befestigungsmitteln 254, mit denen der Kennzeichen-Träger 240 am Lastenträger 50a, 50b befestigbar ist.

Die Lastenträger-Befestigungsmittel 254 umfassen ferner vorteilhaft eine Schlossaufnahme 252, die mit dem Schloss zusammenwirkt. Beispielsweise kann ein am Kennzeichen-Träger 240 angeordnetes Schloss 242 in die Schlossaufnahme 252 eindringen, wenn der Kennzeichen-Träger 240 am Lastenträger 50a befestigt wird.

Weiterhin kann zweckmäßigerweise bei einem erfindungsgemäßen Kennzeichen-Träger eine Dichtung vorhanden sein, die sich beispielsweise dichtend um elektrische Steckkontakte, eine fahrzeugseitige Aufnahme oder dergleichen anlegt, oder aber auch beispielsweise an eine Oberfläche des Stoßfängers. Beispielhaft ist am Steckvorsprung 250 eine Dichtung 260 eingezeichnet, beispielsweise an dessen Außenumfang, die sich in der Art einer Dichtlippe die Fahrzeug-Halterung 13a-13d, 13k umschließend und/oder stirnseitig an diese anlegend wirkt.

Die Lastenträger-Systeme 10a, 10h folgen jeweils einem Steckkonzept zur Befestigung des Lastenträgers am Kraftfahrzeug. An dieser Stelle sei bemerkt, dass die fahrzeugseitig quer mittige Anordnung mit insbesondere nur einem einzigen Befestigungsarm, wobei die fahrzeugseitige Halterung hinter einem Kennzeichen verborgen sein kann, selbstverständlich auch andere Befestigungskonzepte zulässt, beispielsweise ein Verschrauben, Verspannen oder dergleichen.

Die Fahrzeug-Halterung 13a -13d, 13k umfassen jeweils Steckaufnahmen 17a - 17d, 17k, die an Aufnahmeteilen 18a, 18d, 18k vorgesehen sind, beispielsweise Aufnahmehülsen. In die Steckaufnahme 17a - 17d, 17k sind Steckvorsprünge 63a - 63d, 63k einsteckbar, die an den freien Enden der Befestigungsarme 51a - 51d, 51k vorhanden sind. Bevorzugt ist dabei eine drehschlüssige Aufnahme bzw. eine drehschlüssige Halterung, so dass der in die Steckaufnahme 17a - 17d, 17k eingesteckte Steckvorsprung 63a - 63d, 63k unverdrehbar gehalten ist. Dies ist zweckmäßigerweise bereits durch Konturgestaltung von Steckaufnahme und Steckvorsprung bewirkt, bei denen mehrkantige bzw. polygonale Konturen zweckmäßig sind.

Beispielsweise sind bei den Lastenträger-Systemen 10a, 10b, 10c und 10k viereckige bzw. quadratische Querschnitt-Innenkonturen 19 an den Steckaufnahmen 17a - 17c, 17d, 17k vorgesehen, zu denen ebenfalls quadratische Querschnitt-Außenkonturen 64 an den Steckvorsprüngen 63a - 63c, 63d, 63k, formschlüssig passen. Während jedoch die Horizontalabstützung, d.h. die Abstützung bezüglich von Kräften, die im Wesentlichen vertikal nach unten wirken, bei dem Aufnahmeteil 18d, 18k und dem Steckvorsprung 63d, 63k durch eine Bodenwand bzw. eine Bodenseite des Steckvorsprungs 63d, 63k realisiert sind, stehen die Innenkontur 19 und Außenkontur 64 bei den Fahrzeug-Halterungen 13a - 13c und den dazu passenden, ebenfalls Kupplungsteile darstellenden Befestigungsarmen 51a - 51c quasi auf einer Ecke. Dies ermöglicht eine optimale Lastverteilung, insbesondere aber auch eine günstige Zentrierung der Steckverbindung zwischen Steckaufnahme 17a - 17c und Steckvorsprung 63a - 63c.

Der Steckvorsprung 63a - 63c wird also entlang einer Steckachse 20 in die zugehörige Steckaufnahme 17a - 17c eingesteckt. Damit gelangen die jeweiligen Außeneckbereiche des Steckvorsprungs 63a - 63c in Eingriff mit entsprechenden Inneneckbereichen der Steckaufnahme 17a - 17c, unter anderem auch ein unterer Inneneckbereich der Innenkontur 19, der somit eine bodenseitig geschlossene, oben offene Führungskontur oder Führungsnut bildet, sowie ein dazu korrespondierender, bei Gebrauch des Lastenträger-Systems 10a - 10c untere Außeneckkontur der Außenkontur 64 in Eingriff. Der Inneneckbereich bildet dabei eine Stütz-Aufnahme 21, der Außeneckbereich einen Stütz-Vorsprung 65. Mithin stellt also der am weitesten vorstehende Bereich des Stütz-Vorsprungs 65 denjenigen Bereich dar, der die meisten in vertikaler Richtung wirkenden Kräfte aufnimmt, korrespondierend dazu selbstverständlich der am nächsten beim Untergrund befindliche Bereich der Stütz-Aufnahme 21, der dementsprechend auch die meisten Vertikalkräfte aufnehmen kann.

Im Prinzip könnte also der Stütz-Vorsprung 65 um den unteren Lagerpunkt zur Seite kippen, wobei allerdings dann seine Seitenwände 66 an den Seitenwänden 22 der Stütz-Aufnahme 21 zu liegen kommen, seitlich also abgestützt sind. Damit ist also die Verdrehsicherheit gewährleistet, zudem auch eine optimale Zentrierung.

Es versteht sich, dass dieses Konzept des sozusagen auf die Ecke gestellten Vieleckes nicht nur bei Lastenträgern mit einem Befestigungsarm, sondern auch bei Lastenträgern mit mehreren Befestigungsarmen oder Steckvorsprüngen und dazu passenden Steckaufnahmen am Fahrzeug (oder umgekehrt) zweckmäßig ist. Dabei sind auch Kombinationen möglich, d.h. dass beispielsweise an einem Befestigungsarm das Konzept der auf der Ecke stehenden Vieleckkontur realisiert ist, beim anderen Befestigungsarm und der zugehörigen Fahrzeug-Halterung eine runde Kontur (Innenkontur und Außenkontur) gewählt sind. Desweiteren ist festzuhalten, dass das Konzept selbstverständlich auch bei anderen polygonen Innen- und Außenquerschnittskonturen möglich ist, beispielsweise dreieckförmigen, pentagonalen oder hexagonalen Konturen. Zum Beispiel kann man sich vorstellen, dass beispielweise ein dreieckiger Innen- und Außenquerschnitt gewählt ist, wobei sich im Wesentlichen gleiche Winkel des Dreieck zweckmäßigerweise etwa in der selben Horizontalebene liegen, während der dritte Eckbereich des den horizontal darunter liegenden, einzelnen Eckbereich darstellt, auf dem das Dreieck "steht".

Wenn die Steckvorsprünge 63a, 63d, 63k an die Steckaufnahmen 17a - 17d, 17k angesteckt sind, können sie anhand von Fixiermitteln 23a - 23d, 23k fixiert werden, insbesondere bezüglich der jeweiligen Steckachse 20.

Die Fixiermittel 23a, 23b umfassen Spannanker 67a, 67b, deren Zugstab 68, den man auch als Spannstab bezeichnen kann, diagonal zur Steckache 20 verläuft. Die Spannanker 67a, 67b können an Widerlagern 24a, 24b festgelegt sein, die im Bereich der Steckaufnahmen 17a, 17b vorhanden sind. Das Widerlager 24a wird beispielsweise von zwei Halteteilen 25 bereitgestellt, die vom Aufnahmeteil 18a abstehen, vorliegend beispielsweise nach unten. Die Halteteile 25 sind beispielsweise plattenartig. Zwischen den Halteteilen 25 ist eine Einführnut 26 vorhanden, vorliegend als eine Art Schlitz, die einen Zugang zu quer zur Einführnut 26 vorhandenen Haltenuten 27 ermöglicht. Die Haltenuten 27 sind beispielsweise in der Art von Langlöchern ausgestaltet. Es versteht sich, dass auch ein einstückiges Halteteil mit einer Nutanordnung vorgesehen sein kann, die die nachfolgende Funktion eines Widerlagers 24a erfüllt:
An dem dem Widerlager 24a zugeordneten Längsende des Zugstabes 68 des Spannankers 67a ist ein Spannteil 69 oder Widerlagerteil angeordnet, beispielsweise ein quer zur Längserstreckungsrichtung des Zugstabes 68 verlaufendes Anker- oder Hakenelement. Das Spannteil 69 oder Widerlagerteil ist beispielsweise stabförmig. Das Spannteil 69 ist in eine solche Drehposition verstellbar, dass es in die Einführnut 26 einführbar ist. Wird der Zugstab 68 anschließend wieder verdreht, gelangt das mit dem Zugstab 68 drehfest verbundene, beispielsweise einstückige oder angeschweißte Spannteil 69 oder Widerlagerteil in Eingriff mit den Einführnuten 26. Zu diesem Zweck sind diese als entsprechende Langlöcher ausgestaltet, so dass das Spannteil 69 quasi einschwenkbar ist. Die Haltenuten 27 verlaufen beispielsweise etwa rechtwinkelig zu einer Spannachse 70, die der Längserstreckungsachse oder Längserstreckungsrichtung des Zugstabes 68 entspricht. Die Haltenuten 27 sind zweckmäßigerweise bezüglich ihrer Längserstreckungsrichtung zueinander versetzt, so dass sie beispielsweise zu einem Punkt, der von der Spannachse 70 oder dieser sehr nahe stehenden, parallelen Achse durchsetzt ist, punktsymmetrisch sind. Somit muss also der Bediener den Zugstab 68 lediglich verdrehen, bis das Spannteil 69 an Längsenden den Haltenuten 27 anschlägt und dann verdrehfest festgelegt ist.

Jedenfalls legt das Widerlager 24a, 24b den Spannanker 67a, 67b bezüglich der Spannachse 70 (oder Zugachse) zugfest fest.

Der Befestigungsarm 51a, 51b könnte zur Aufnahme des Zugstabes 68 des Spannankers 67a, 67b beispielsweise eine Bohrung aufweisen. Vorliegend ist jedoch eine Führungshülse 71 vorgesehen, die den Befestigungsarm 51a, 51b diagonal, d.h. entlang der Spannachse 70, durchsetzt. In der Führungshülse 71 ist der Zugstab 68 drehbar aufgenommen.

Am vom Spannteil 69 abgewandten Ende des Zugstabes 68 des Spannankers 67a ist ein Gewinde vorgesehen, das vor die Führungshülse 71 vorsteht. Auf dieses Gewinde ist ein Spannglied 72a aufgeschraubt. Dass Spannglied 72a umfasst beispielsweise ein knebelartiges Handgriffgehäuse, in dem eine Spannmutter zum Aufschrauben auf das vorgenannte Gewinde des Zugstabes 68 vorhanden ist. Zweckmäßigerweise weist das Spannglied 72 ein Schloss 73 auf, mit dem es verschließbar ist. Beispielsweise wird der Handgriffkörper durch Verschließen des Schlosses 73 von der innenliegenden Spannmutter drehentkoppelt, so dass er bezüglich der Spannmutter frei drehen kann, jedoch keine Kraftübertragung im Sinne eines Lösens des Spanngliedes 72 mehr ausüben kann. Die Haltenut 27 bildet einen Bestandteil einer Widerlager-Aufnahme 28 zum verdrehsicheren Halten des Spannteils 69. Beim Lastenträger-System 10b ist das Widerlager 24a zwar zum bezüglich der Spannachse 70 zugfesten Halten, jedoch nicht zum verdrehsicheren Halten des Spannankers 67b ausgestaltet. Vielmehr ist ein Schraubgewinde vorgesehen, in das der Spannanker 67b einschraubbar ist. Beispielsweise umfasst das Widerlager 24b eine Mutter 29, die am Aufnahmeteil 18b angeordnet, beispielsweise angeschweißt ist. Das Spannglied 72b ist am Zugstab 68 des Spannankers 67b verdrehfest angeordnet, so dass es quasi den Kopf einer Schraube bildet. Auch das Spannglied 72b ist als eine Art Handgriff ausgestaltet, d.h. es kann bequem mit einer Hand umgriffen und verdreht werden.

Die Spannglieder 72a, 72b stützen sich auf der Führungshülse 71 ab, so dass sie eine Spannkraft entlang der Spannachse 70 ausüben. Dadurch wird zum einen der Stütz-Vorsprung 65 in die Stütz-Aufnahme 21 quasi hineingedrückt, nämlich durch eine zur Steckachse 20 rechtwinkelige Kraftkomponente R, zum anderen wird das freie Ende des Steckvorsprungs 63a, 63b gegen einen Längsanschlag 30 am Aufnahmeteil 18a, 18b gezogen bzw. gespannt, nämlich durch eine zur Steckachse 20 parallele Kraftkomponente P.

Der Längsanschlag 30 und das Widerlager 24a, 24b sind in einer bevorzugten Ausführungsform an voneinander entfernten, beispielsweise diagonal zueinander liegenden Bereichen bezüglich der Steckachse 20 angeordnet. Beispielsweise ist der Längsanschlag 30 im Inneren des hülsenartigen Aufnahmeteils 18a, 18b oben angeordnet, während das Widerlager 24a, 24b unten (bezogen jeweils auf eine Horizontallage) angeordnet ist. Weiterhin ist es vorteilhaft, dass das Widerlager 24a, 24b und der Längsanschlag 30 bezogen auf die Steckachse 20 einen Längsabstand zueinander haben, was quasi zu einem Verkippen und Verkanten der Steckvorsprungs 63a, 63b in der Steckaufnahme 17a, 17b führt. Das Widerlager 24a, 24b definiert dabei sozusagen einen Kipppunkt oder Drehpunkt, um den der Steckvorsprung 63a, 63b um ein gewisses, sehr geringes Maß schwenken kann (Pfeil S), jedenfalls soweit schwenken kann, bis sein freies Ende am Längsanschlag 30 anschlägt.

Eine in der Zeichnung nicht dargestellte Ausführungsform kann vorsehen, dass das freie Ende eines Steckvorsprungs im Wesentlichen flächig, d.h. im mehreren Drehwinkelpositionen bezüglich der Steckachse oder Steckmittelachse anschlagen kann. Bei den Ausführungsbeispielen ist jedoch eine außermittige bzw. von der Steckachse abgewandte Position für den Längsanschlag 30 gewählt. Das freie Ende des Steckvorsprungs 63a, 63b schlägt also nicht vollflächig an einem Längsanschlag an, sondern nur partiell, wobei die Anordnung vorteilhaft so getroffen ist, dass ein Längsanschlagbereich 75, mit dem der Steckvorsprung 63a am Längsanschlag 30 anschlägt, und ein Widerlagerbereich 74, beispielsweise der Austrittsbereich des Spannankers 67a, 67b aus dem Befestigungsarm 51a, 51b, an einander entgegengesetzten Seiten bezüglich der Steckachse 20 bzw. der Steckmittelachse oder die sich jeweilige Achse enthaltenden Ebene liegt.

Die Aufnahmeteile 18a - 18d, 18k sind beispielsweise an den Fahrzeug-Träger 11 angeschraubt, angeschweißt oder angeklebt. Sie können einen jeweiligen Fahrzeug-Träger 11, der vorzugsweise als ein Rohr, insbesondere Mehrkantrohr, ausgestaltet ist, auch durchsetzen oder an einer Seitenwand angeordnet sein. Beispielsweise sind zusätzliche Stützen 31 bei der Fahrzeug-Halterung 13a vorhanden, die beim Fahrbetrieb auftretende Kräfte optimal und an mehreren geometrisch voneinander entfernten Punkten auf den Fahrzeug-Träger 11 einleiten.

Das nachfolgende, beim Lastenträger-System 10b realisierte Rast-und Sicherungskonzept könnte selbstverständlich nicht nur bei dem mit einem Spannanker diagonalen Verlauf versehenen Stecksystem zum Einsatz kommen, so z.B. auch bei dem Lastenträger-System 10a, sondern auch in anderer Form zusätzliche Sicherungselemente und Fixierelemente aufweisenden Systemen, z.B. in der Art des Lastenträger-Systems 10c. An der Fahrzeug-Halterung 13b ist nämlich ein Rastglied 32 vorgesehen, das in eine Rastaufnahme 76 am Steckvorsprung 63b einrasten kann. Das Rastglied 32 umfasst ein Federelement 33, das mit einem Halteabschnitt 34 am Aufnahmeteil 18b ortsfest festgelegt ist und von dem ein Rastabschnitt 35 federn absteht. Der Halteabschnitt 34 ist beispielsweise U-förmig, wobei seine Seitenschenkel, von denen einer in den Rastabschnitt 35 übergeht, in Aufnahmen 36 eines Halters 37 eingesetzt sind. Die Aufnahmen 36 sind an einem Stützschenkel 38 des Halters 37 angeordnet und voneinander abgewandt offen. Somit kann der U-förmige Halteabschnitt 34 quasi von der Seite her, d.h. in Richtung einer Längserstreckungsrichtung des Rastabschnitts 35 eingesteckt werden, so dass sich die Seitenschenkel des Halteabschnitts 34 in den Aufnahmen 36 abstützen. Der Stützschenkel 38 steht beispielsweise winkelig, z.B. rechtwinkelig, von einem Träger 39 ab, der in der Art eines Halteblechs ausgestaltet ist. Der Träger 39 ist mit dem Fahrzeug-Träger 11 und/oder der Fahrzeug-Halterung 13b verbunden, beispielsweise angeschweißt.

Der Rastabschnitt 35 steht in die Steckaufnahme 17b vor. Beispielsweise steht der Rastabschnitt 35 in eine Ausnehmung 40 am Aufnahmeteil 18b vor, so dass er tangential in der Steckaufnahme 17b angeordnet ist. Wenn der Steckvorsprung 63b in die Steckaufnahme 17b eingesteckt wird, verdrängt eine Schräge 77 am vorderen, freien Ende des Steckvorsprungs 63b den Rastabschnitt 35, der federnd ist, aus der Steckaufnahme 17b heraus. Der beispielsweise stabartige oder stangenartige Rastabschnitt 35 gleitet dann am Außenumfang des Steckvorsprunges 63b entlang, bis die Rastaufnahme 76 am Steckvorsprung 63b im Bereich in der Ausnehmung 40 zweckmäßigerweise geführten Federelement 33 bzw. Rastabschnitt 35 ist und somit der Rastabschnitt 35 federnd in die Rastaufnahme 76 einrasten kann. Der Rastabschnitt 35 bildet dann einen Anschlagabschnitt, da der Steckvorsprung 63b mit den Seitenwänden der Rastaufnahme 76 am Rastabschnitt 35 anschlägt. Somit kann also der Steckvorsprung 63b nicht mehr unabsichtlich aus der Steckaufnahme 17b heraus gelangen. Somit ist also eine Verrastung gegeben, die zugleich eine Sicherheitsfunktion erfüllt. Zudem ist das anschließende Spannen, beispielsweise Einhängen des Spannankers 67a oder 67b in das zugeordnete Widerlager 24a, 24b sehr einfach, da die Bauteile zueinander bereits vorpositioniert sind.

Zum Lösen kann der Bediener auf einen Betätigungsabschnitt 41 des Federelements 33 bzw. Rastglied 32 einwirken, der vor das Aufnahmeteil 18b vorsteht, wobei zweckmäßigerweise vorgesehen ist, dass der Betätigungsabschnitt 41 und der Halteabschnitt 34 an einander entgegengesetzten Seiten der Steckaufnahme 17b vorhanden sind.

Es versteht sich, dass das vorgestellte Rastkonzept und Sicherungskonzept exemplarisch ist, d.h. dass beispielsweise auch ein Rastbolzen oder Rastvorsprung vorgesehen sein kann, der federbeaufschlagt in seine Rast- oder Sicherungsstellung ist und beispielsweise durch Ziehen oder Drücken oder eine sonstige Betätigung aus seiner Rast- und Sicherungsstellung in eine Lösestellung bringbar ist.

Ein besonders einfaches Konzept zur Herstellung elektrischer Kontakte zwischen Kraftfahrzeug und Lastenträger ist in den Fig. 7 und 8 dargestellt.

Beispielsweise sind im Bereich der Querschnitt-Innenkontur 19 des Aufnahmeteils 18a oder 18b elektrische Kontakte vorgesehen, insbesondere an einem Kontaktträger 42. Das Aufnahmeteil 18a, 18b ist, wie gesagt hülsenartig, so dass der Kontaktträger 42 in den dadurch gebildeten Innenraum geschützt untergebracht werden kann.

Auch der Steckvorsprung 63a, 63b ist zweckmäßigerweise rohrartig oder hülsenartig, so dass auch dort ein Aufnahmeraum für einen Kontaktträger 78 vorhanden ist. Beim Stecken der Steckvorsprünge 63a, 63b in die Steckaufnahmen 17a, 17b gelangen die Kontakte an den Kontaktträgern 42, 78 miteinander in elektrische Verbindung. Beispielsweise sind die einen Kontakte als Kontaktvorsprünge, die anderen Kontakte als Kontaktbuchsen ausgestaltet oder weisen solche jeweils auf. Somit ist also beim Montieren des Lastenträgers 50a oder 50b sofort der elektrische Kontakt zwischen Kraftfahrzeug und Lastenträger hergestellt, insbesondere auch mehrpolig, so dass beispielsweise die Leuchten 59 ohne weitere Bedienhandlung mit dem Bordnetz des Kraftfahrzeugs 200 verbunden sind und genutzt werden können.

Zwar wäre auch bei dem Lastenträger-System 10a oder 10c-10k eine elektrische Kontaktierung wie in den Fig. 7 und 8 dargestellt möglich. Dort sind aber beispielsweise Steckdosen in der Art von Anhängersteckdosen zur Bereitstellung der elektrischen Kontakte 14 vorgesehen.

Der Steckvorsprung 63c und die Steckaufnahme 17c haben rechteckige oder quadratische Außen- und Innenkonturen. Beispielsweise ist die Steckaufnahme 17c an dem hülsenartig ausgestalteten Aufnahmeteil 18c vorgesehen. An dem Aufnahmeteil 18c ist ein außermittiger Längsanschlag 30 vorgesehen. Der Längsanschlag 30 und ein Widerlagerbereich bzw. Spannbereich des Aufnahmeteils 18c sind bezüglich der Steckachse 20 mit einem Längsabstand zueinander versehen, was ein gewisses Verkippen oder Verkanten im Sinne eines optimierten Verspannens vorteilhaft bewirken kann. Der Widerlagerbereich 43 ist beispielsweise an einer Stützhülse 44 angeordnet, die ihrerseits wiederum am freien Ende des Aufnahmeteils 18c verdrehsicher angeordnet ist, beispielsweise angeschweißt oder angeklebt oder angeschraubt. Auf die Stützhülse 44, die ein Gewinde aufweist, ist eine drehbar am Befestigungsarm 51c gelagerte Überwurfhülse 79 aufschraubbar, die auf das Gewinde an der Stützhülse 44 aufschraubbar ist. Die beiden Gewinde bilden Formschlusskonturen und Gegen-Formschlusskonturen.

Die Überwurfhülse 79 ist zwar drehbar und in einem gewissen Maß bezüglich der Steckachse 20, die insoweit auch eine Spannachse darstellt, verschieblich, jedoch nur bis zu einem nicht dargestellten Endanschlag. Dadurch ist es möglich, dass durch Aufschrauben der Überwurfhülse 79 auf die Stützhülse 44 der Befestigungsarm 51c an der Fahrzeug-Halterung 13c verspannt ist.

An dem Lastenträger-System 10c wird deutlich, dass ein Längsversatz zwischen Widerlagerbereich (Widerlagerbereich 43) und Längsanschlag (z.B. Längsanschlag 30) ein verbessertes Verspannen bewirkt, auch dann, wenn kein zur Steckachse diagonal wirkender Spannanker vorhanden ist, z.B. der Spannanker 67a oder 67b.

Desweiteren ist der Längsanschlag 30 bezüglich eines freien Endes der Steckaufnahme 17c bezüglich der Steckachse 20 axial versetzt. Zudem ist der Längsanschlag 30 oberhalb einer Horizontalebene angeordnet, unter der Stütz-Vorsprung 65 bzw. die Stütz-Aufnahme 21 sind, was auch einen Diagonal-Spanneffekt, mithin also ein Verkanten von Steckvorsprung und Steckaufnahme miteinander bewirkt. Somit ist ein optimaler Halt möglich.

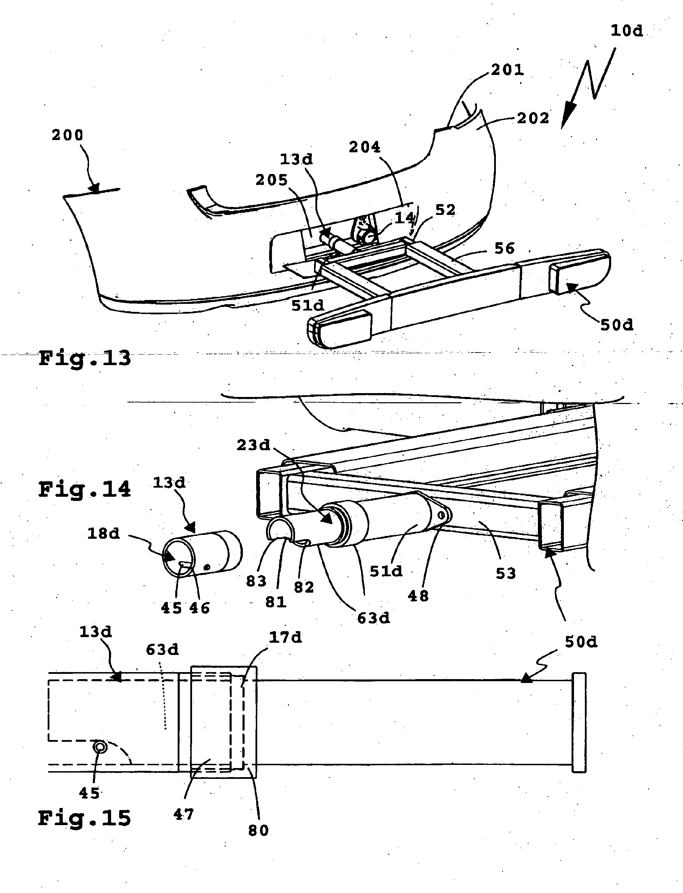

Bei dem Lastenträger-System 10d gemäß Fig. 13 - 15 ist ebenfalls eine Überwurfhülse vorgesehen, die am Befestigungsarm 51d drehbar und verschieblich gelagert ist. Der Steckvorsprung 63d ist ebenso wie die dazu passende Steckaufnahme 17d rund, beispielsweise kreisrund. Dadurch ist prinzipiell ein Verdrehen der beiden Bauteile relativ zueinander möglich. Allerdings ist am vorderen, freien Ende des Steckvorsprungs 63d eine Anschlagausnehmung 81 vorhanden, die nur einen Teilkreisumfang oder Teilumfang des Steckvorsprungs 63d umfasst. Somit bilden freie Umfangsstirnseiten der Anschlagausnehmung 81 Drehanschläge 83, die an einem Anschlagelement 45 im Inneren der Steckaufnahme 17d verdrehsicher anschlagen. Das Anschlagelement 45 bildet also einen Drehanschlag. Beispielsweise wird das Anschlagelement 45 von einem Querbolzen 46 gebildet, der in der Art einer Sekante positioniert ist. An die parallel zur Steckachse 20 verlaufenden Drehanschläge 83 schließt sich eine als Längsanschlag dienende Schräge 82 an. Wenn also der Steckvorsprung 63d in die Steckaufnahme 17d eingesteckt wird, gleitet die Schräge 82 am Anschlagelement 45 entlang und an dieser auch auf, so dass ein Verspannen der beiden Bauteile aneinander bewirkt wird, insbesondere dann, wenn die Überwurfhülse 80 auf ein Gewinde 47 am Aufnahmeteil 18d aufgeschraubt wird.

Das Gewinde 47 oder die Stützhülse 44 bilden ein Widerlager für die als Spannmutter dienende Überwurfhülse 79 oder 80. Anstelle von Schraubgewinden können selbstverständlich auch beispielsweise Bajonettkonturen, Spannschrägen, Klauen oder dergleichen vorgesehen sein.

Während der Befestigungsarm 51a, 51b beispielsweise mittels einer U-förmigen Aufnahme, in die der Querträger 53 eingreift, mit dem Grundträger 52 verbunden ist, ist der Befestigungsarm 51d beispielsweise mit einem Flansch 48 mit dem Querträger 53 verbunden.

Bei dem Lastenträger-System 10k haben die Steckaufnahme 17k und der Steckvorsprung 63k ähnliche Konturen wie die Steckaufnahme 17a, 17b und die Steckvorsprünge 63a, 63b. Ferner ist auch ein Spannanker vorhanden, nämlich ein Spannanker 67k, der allerdings nicht selbst ein Spannteil umfasst, sondern auf einen Spannarm 300 wirkt, der an einem freien Ende 301 ein Spannteil 302 bildet oder aufweist.

Vom Befestigungsarm 51k stehen z.B. plattenartige oder laschenartige Halteelemente 325 ab, die eine Aufnahme 326 zur Aufnahme des Querträgers 53 an ihren freien Enden halten. Die Halteelemente 325 erstrecken sich ausgehend vom Befestigungsarm 51k nach hinten unten, so dass der Lastenträger 50k eine relativ tiefe, fahrbahnnahe Position einnimmt.

Ein Rohrkörper 312, der die Steckaufnahme 63k umfasst, ist gegenüber dem Fahrzeug-Träger 11 bezogen auf eine Fahrbahnoberfläche höher angeordnet und wird durch ebenfalls plattenartige oder laschenartige Halteelemente 327 gehalten.

Der Spannanker 67k weist einen Zugstab 68 auf, der den Steckvorsprung 63k durchdringt. Der Zugstab 68 ist in einer Führungshülse 71 geführt. Die Führungshülse 71 ist beispielsweise an einer Oberseite des Steckvorsprungs 63k angeordnet und steht nach oben vor diesen vor. Der Zugstab 68 verläuft quer zur Steckachse 20, beispielsweise rechtwinkelig, wobei selbstverständlich auch Schrägverläufe, d.h. andere Winkel als ein rechter Winkel, möglich sind. An seinem nach unten vor den Steckvorsprung 63k vorstehenden Endbereich hat der Zugstab 68 ein Gewinde, das in eine Mutter 303 eingeschraubt ist.

Am anderen Längsendbereich des Zugstabs 68 ist ein Handgriff 304 angeordnet, mit dem der Zugstab 68 drehbetätigbar ist. Am Handgriff 304 ist ein Schloss 305 vorgesehen, mit dem eine Drehkoppelung des Handgriffs 304 mit dem Zugstab 68 herstellbar (Schloss 305 ist in Offenstellung) oder gelöst (Schloss 305 ist in Schließstellung) werden kann, so dass die Fixiermittel 23k mittels des Schlosses 305 verschließbar sind.

Der Handgriff 304 stützt sich an der Führungshülse 71 ab. Der Zugstab 68 durchdringt ferner den Spannarm 300 an einer Bohrung 306. Der Spannarm 300 ist zwischen der Mutter 303 und der Unterseite des Steckvorsprungs 63k angeordnet. Die Bohrung 306 ist so getroffen, dass der Spannarm 300 um den Zugstab 68 schwenken kann. Der Spannarm 300 liegt auf der Mutter 303 auf. Die Bohrung 306 ist etwa im Bereich einer Längsmitte des Spannarms 300 angeordnet.

An seinem dem freien Ende des Steckvorsprungs 63k zugewandte Endbereich hat der Spannarm 300 einen Haken 307, der das Spannteil 302 bildet. In einer Fixierstellung oder Eingreifstellung greift ein Hakenvorsprung 308 des Hakens 307 in eine Hakenaufnahme 309 an der Steckaufnahme 17k ein. Die Hakenaufnahme 309 bildet ein Widerlager 24k für das Spannteil 302. Wenn der Zugstab 68 aus der Mutter 303 ausgeschraubt wird, kommt der Spannarm 300 frei derart, dass das Spannteil 302, mithin der Haken 307, aus dem Widerlager 24k, also der Hakenaufnahme 309, heraus schwenken kann. Wenn der Spannanker 67k in Richtung seiner Spannstellung verstellt wird, der Zugstab 68 also in die Mutter 303 eingeschraubt wird, zieht der Zugstab 68 den Spannarm 300 in Richtung einer Umfangswand 310 des Steckvorsprungs 63k, beispielsweise dem unteren Stütz-Vorsprung 65. Dadurch wird zum einen bewirkt, dass der Hakenvorsprung 308 in die Hakenaufnahme 309 eindringt. Zudem wird der Hakenvorsprung 308 vorteilhaft auch von einem freien Ende 311 der Steckaufnahme 17k weg und somit der Steckvorsprung 63k in die Steckaufnahme 17k hinein gezogen, was ein Verspannen bewirkt.

Weiterhin ist es zweckmäßig, wenn am Hakenvorsprung 308 und/oder an der Hakenaufnahme 309 eine oder mehrere Spannschrägen 328 vorhanden sind, die im Sinne eines Hineinziehens des Steckvorsprungs 63k in die Steckaufnahme 17k wirken.

Das freie Ende 311 der Steckaufnahme 17k hat einen Schrägverlauf bezüglich der Steckachse 20. Ein unterer Teil 313 des Rohrkörpers 312 der Steckaufnahme 17k steht vor einen oberen Teil 314 des Rohrkörpers 312 bezüglich der Steckachse 20 vor. Am unteren Teil 313 ist das Widerlager 24k angeordnet. Der Rohrkörper 315 des Steckvorsprungs 63k kippt oder schwenkt also ein wenig um eine Innenkante des oberen Teils 314 des Rohrkörpers 312, wenn sein Längsanschlagbereich 75 am Längsanschlag 30 der Steckaufnahme 17k anschlägt und der Spannarm 300 durch den Spannanker 67k gespannt wird.

An dieser Stelle sei bemerkt, dass das Spannkonzept gemäß der Erfindung nicht nur bei polygonalen Querschnitten von Steckvorsprung und Steckaufnahme realisierbar ist, sondern auch beispielsweise bei runden Querschnitten, beispielsweise wie den Kupplungen der Systeme 10c, 10d.

Bevorzugt ist es, wenn der Spannarm 300 etwa parallel zum Rohrkörper 315, beispielsweise den Seitenwänden 66, verläuft. Ein Armabschnitt 316 des Spannarms 300 hat beispielsweise Seitenschenkel 317, die zueinander winkelig sind, etwa in demselben Winkel wie die Seitenwände 66 des Rohrkörpers 315.

Zwischen den Seitenschenkeln 317 und den Seitenwänden 66 können Stützkörper oder Lagerkörper 318 vorgesehen sein, zweckmäßigerweise um einen zumindest etwa parallelen Verlauf der Seitenschenkel 317 zu den Seitenwänden 66 herzustellen, wenn der Spannarm 300 seine Spannstellung einnimmt. Die optionalen Lagerkörper 318 sind beispielsweise an einem vom Spannteil 302 abgewandten Längsendbereich des Spannarms 300 vorgesehen.

Dort könnte auch ein Lagerelement 319 vorgesehen sein, um den Spannarm 300 zu lagern. Dann wäre beispielsweise die Lagerung mittels des Spannankers 67k nicht nötig. Das Lagerelement 319 wird beispielsweise von einer Schraube gebildet, die den Spannarm 300 an einer Bohrung 320 mit Bewegungsspiel durchdringt und in eine Bohrung 321 am Rohrkörper 315 eingeschraubt ist. Ein Durchmesser der Bohrung 320 ist jedenfalls kleiner als beispielsweise ein Kopf der Schraube bzw. des Lagerelements 319, so dass der Spannarm 300 auf diesem Schraubenkopf aufliegen kann.

Der Spannarm 300 kann also am Spannanker 67k und/oder dem Lagerelement 319 schwenkbar gelagert sein.

Zweckmäßig ist eine Federbelastung des Spannarms 300 in seine Eingreifstellung. Beispielsweise ist eine Feder 322 vorgesehen, die den Spannanker 67k in Richtung der Spannstellung beaufschlagt. Die Feder 322 ist zwischen dem Handgriff 304 und der Oberseite des Rohrkörpers 315 angeordnet, so dass sie durch Beaufschlagung des Handgriffs 304 den Zugstab 68 nach oben drückt und somit den Spannarm 300 in Richtung der Spannstellung indirekt beaufschlagt.

Ein bei den Lastenträger-Systemen 10a-10b bereits angedeutetes Steck-Konzept zur Herstellung elektrischer und/oder optischer Verbindungen zwischen dem Fahrzeug 200 und dem Lastenträger 50a, 50b ist auch beim Lastenträger-System 10k realisiert und kann in seiner speziellen, nachfolgend beschriebenen Ausprägung selbstverständlich auch bei den Lastenträger-Systemen 10a-10b verwendet werden.

An der Fahrzeug-Halterung 13k ist eine Fahrzeug-Kontakteinheit 340 mit Fahrzeug-Kontakten 341 vorhanden, die mit Lastenträger-Kontakten 371 einer Lastenträger-Kontakteinheit 370 in elektrischen Kontakt gelangen. Die Fahrzeug-Kontakte 341 umfassen Steckbuchsen 342 zur Aufnahme der als Steckkontakte 372 ausgestalteten Lastenträger-Kontakte 371. Selbstverständlich könnten auch die Lastenträger-Kontakte 371 als Steckbuchsen ausgestaltet sein oder Steckbuchsen umfassen, während auch die fahrzeugseitigen Kontakte einen oder mehrere Steckkontakte umfassen können.

Die Kontakte 341, 371 sind an Kontaktträgern 343, 373 angeordnet. Man kann die Kontaktträger 343, 373 auch als Halterungen bezeichnen.

Die Fahrzeug-Kontakteinheit 340 ist in einem Innenraum 323 der Steckaufnahme 17k angeordnet. Die Lastenträger-Kontakteinheit 370 hingegen ist in einem Innenraum 324 des Steckvorsprungs 63k, also im Rohrkörper 315, aufgenommen. Somit sind die Kontakteinheiten 340, 370 vor Umwelteinflüssen geschützt. Weiterhin treten sie quasi automatisch miteinander in Verbindung, wenn der Steckvorsprung 63k in die Steckaufnahme 17k eingesteckt wird.

Die Kontaktträger 343, 373 umfassen Trägerkörper 345, 375, in denen Aufnahmekammern 346, 376 für die Steckbuchsen 342 und die Steckkontakte 372 vorgesehen sind.

Die Steckbuchsen 342 sind mit ihren hinteren Abschnitten in den Aufnahmekammern 346 aufgenommen und werden dort vom Trägerkörper 345 gehalten. Vordere Abschnitte der Steckbuchsen 342 stehen in einen vorderen Abschnitt 348 eines Gehäuses 349 vor, das somit die Steckbuchsen 342 schützt. In dem vorderen Abschnitt 348 sind beispielsweise Aufnahmekammern 366 für die Steckbuchsen 342 vorgesehen.

Die Steckbuchsen 342 stehen nicht vor eine Stirnseite 347 des Gehäuses 349 vor. An dieser Stirnseite 347 sind beispielsweise Durchtrittsöffnungen vorhanden, durch die die Steckkontakte 372 in die Steckbuchsen 342 eindringen können.

Auch der Kontaktträger 343 vorteilhaft durch das Gehäuse 349 geschützt. Beispielsweise ist er in einer Aufnahme 367 an der Rückseite des Gehäuses 349 aufgenommen. Beispielsweise sind am Außenumfang des an sich zylindrischen Trägerkörpers 345 Rastnasen 368 vorhanden, die in zugeordnete Rastausnehmungen einer Umfangswand oder Stützwand 361 der Aufnahme 367 einrasten können.

Weiterhin sind Stütz- oder Führungskonturen zweckmäßig, die einen Kontaktträger einer erfindungsgemäßen Kontakteinheit im zugeordneten Gehäuse stützen oder führen. Beispielsweise sind am Außenumfang des Trägerkörpers 345 bzw. des Kontaktträger 343 einer oder mehrere Führungsvorsprünge 369 vorgesehen, so dass der Kontaktträger 343 drehwinkelrichtig in die Aufnahme 367 eingeführt werden kann, an der die Führungsvorsprünge 369 führende Führungsnuten vorgesehen sind. Selbstverständlich könnte der Kontaktträger 343 auch eine polygonale außen Umfangskontur aufweisen, die beispielsweise zur zumindest im Bereich einer Aufnahme 367 vorhandenen polygonalen Außenumfangskontur des Gehäuses 349 passt.

Der Kontaktträger 373 bildet ein Gehäuse für die Steckkontakte 372.

Die Steckkontakte 372 sind mit ihren hinteren Abschnitten 378 in den Aufnahmekammern 376 aufgenommen, wo auch die elektrische Kontaktierung mit teilweise dargestellten elektrischen Leitungen 399 vorgesehen ist. Vordere Abschnitte 379 der Steckkontakte 372 stehen nach vorn vor eine Stirnseite 377 des Kontaktträgers 373 vor. Die Aufnahmekammern 376 sind hinten mit Verschlusselementen 380 verschlossen, durch die die Leitungen 399 hindurchgeführt werden können, so dass sie dann im Innenraum 324 des Rohrkörpers 315 weiter verlaufen.

An den Stirnseiten 347, 377 der Kontaktträger 343, 373 sind zweckmäßigerweise Stützkonturen 381 zum Abstützen der vorderen Abschnitte 379 der Steckkontakte 372 vorgesehen.

Der Kontaktträger 373 und das Gehäuse 349 haben polygonale Außenumfänge 344, 374, passend zu den ebenfalls polygonalen Innenumfangskonturen der Innenräume 323, 324, in denen sie somit verdrehsicher aufgenommen sind. Die Außenumfänge 344 sind beispielsweise rechteckig oder quadratisch.

Der vordere Abschnitt 348 des Trägerkörpers 345 steht in den Innenraum 324 des Steckvorsprungs 63k vor, wenn dieser in die Steckaufnahme 17k eingesteckt ist. Die Steckkontakte 372 stehen nicht vor ein freies Ende des Steckvorsprungs 63k vor, sind also diesem gegenüber etwas zurückversetzt, so dass sie geschützt im Innenraum 324 angeordnet sind. Allerdings ragt der vordere Abschnitt 348 so weit in den Innenraum 324 hinein, dass die Steckkontakte 372 in die Steckbuchsen 342 mit ihren vorderen Abschnitten 379, den eigentlichen Steckabschnitten, eindringen können und in den Steckbuchsen 342 aufgenommen sind.

Dann liegen die Stützkonturen 381 vorteilhaft an der Stirnseite 347 an, sind jedenfalls nahe bei der Stirnseite 347. Dadurch gibt es zwischen den beiden Kontakteinheiten 340, 370 im aneinander gesteckten Zustand keine oder kaum freiliegende elektrische Kontaktflächen.

Die Verschlusselemente 380 bestehen beispielsweise aus Gummi oder elastischem Kunststoff, so dass die durch sie hindurch geführten elektrischen Leitungen dicht umschlossen sind. Weiterhin haben die Verschlusselemente 380 an ihrem Außenumfang Dichtkonturen 382, die im Sinne eines Abdichtens am Innenumfang der Aufnahmekammern 376 anliegen.

Der Trägerkörper 345 bzw. das Gehäuse 349 sind durch einen Deckel 350 verschlossen. Der Deckel 350 ist in einer Aufnahme 351 an der von der Einsteckseite der Steckbuchsen 342 abgewandten Seite, der Rückseite, des Gehäuses 349 aufgenommen.

Eine elektrische Verbindung der Steckbuchsen 342 mit elektrischen Leitungen 352 ist zweckmäßigerweise in der Aufnahme 351 vorgesehen, könnte aber selbstverständlich auch im Bereich der Aufnahmekammern 346 vorgesehen sein.

Die Leitungen 352 sind durch ein Anschlussstück 353 hindurchgeführt, das mit einer hinteren Wand 354 des Deckels 350 verbunden oder einstückig ist. Das Anschlussstück 353 verläuft winkelig zur Steckachse, in der die Steckkontakte 372 in die Steckbuchsen 342 eingesteckt werden, also entsprechend der Steckachse 20, vorliegend rechtwinkelig. Somit sind die Leitungen 352 nach hinten unten von der Fahrzeug-Kontakteinheit 340 weggeführt, was Platz sparend ist. Das Anschlussstück 353 ist zweckmäßigerweise als eine Kabeltülle und oder als Abknickschutz ausgestaltet.

Am Außenumfang des Deckels 350 ist zweckmäßigerweise eine vorteilhaft Dichtrillen oder Rippen umfassende Dichtung 355 vorgesehen, mit der sich der Deckel 350 am Innenumfang der Aufnahme 351 oder einer in der Aufnahme 351 vorgesehenen Stützwand 361 abstützt. Selbstverständlich könnte der Deckel 350 auch Rastnasen, Klemmvorsprünge oder dergleichen aufweisen, um mit dem Gehäuse 349 und/oder dem Kontaktträger 343 verbunden zu werden. Weiterhin könnte der Deckel auch verschraubt sein. Selbstverständlich kann auch an anderer Stelle eine Dichtung vorgesehen sein, die zwischen dem jeweiligen Deckel und dem Gehäuse oder Kontaktträger angeordnet ist und die innen liegenden elektrischen Bauteile stützt.

Zweckmäßigerweise könnte in der Aufnahme 351 ein Steuergerät 356 angeordnet sein, das zur Steuerung der elektrischen Komponenten des Lastenträgers 50k und/oder zur elektrischen Anbindung des Lastenträgers 50k an einem Bordnetz des Kraftfahrzeugs 200 dient. Selbstverständlich wäre es auch möglich, bei oder an der Kontakteinheit 370 ein Steuergerät vorzusehen, das beispielsweise am oder im Kontaktträger 373 angeordnet sein könnte.

Vorliegend wird der Deckel 350 durch einen Rasthalter 357 am Gehäuse 349 gehalten. Der Rasthalter 357 umfasst einen Ringkörper 358, von dem Rastnasen 359 nach vorn abstehen. Die Rastnasen 359 rasten in Rastaufnahmen 360 am Gehäuse 349 ein. Die Rastaufnahmen 360 sind beispielsweise am Außenumfang der Aufnahme 351 vorgesehen. Die Rastnasen 359 sind zweckmäßigerweise in der Art von Haken ausgestaltet. Die Rastnasen 359 greifen beispielsweise in einen Zwischenraum zwischen der Stützwand 361 und einer Umfangswand der Aufnahme 351 ein. Der Ringkörper 358 liegt an einer Rückseite des Deckels 350 an, beispielsweise an der Wand 354. Die Rastnasen 359 stehen nach vorn vor eine Vorderseite des Deckels 350 vor.

Man könnte den Rasthalter 357 auch als eine Art Klammer bezeichnen. Jedenfalls ist ein einfaches Rastkonzept realisiert. Weiterhin können beispielsweise für den Deckel 350 und den Rasthalter 357 verschiedene Materialien verwendet werden. So ist beispielsweise der Deckel 350 relativ elastisch und weist einstückig die (Umfangs-) Dichtung 355 und das Anschlussstück 353 auf, während der Rasthalter 357 aus vergleichsweise härterem, jedoch zumindest in Bezug auf die Rasthaken oder Rastnasen 359 elastischem Material, zum Beispiel Kunststoff, besteht.

Ein Außenumfang des Steckvorsprungs 63k und ein Innenumfang der Steckaufnahme 17k sind in erster Linie dafür ausgestaltet, dass diese beiden Komponenten formschlüssig aneinander anliegen. Außerdem ist es prinzipiell auch möglich, dass die beiden Komponenten zumindest während des Aneinandersteckens um ein gewisses Maß relativ zur Steckachse 20 verkippen, sich verkanten oder dergleichen. Dabei besteht die Gefahr, dass die Steckkontakte 372 sozusagen nicht in die Steckbuchsen 342 "hinein finden" , so dass sie im Extremfall auch beschädigt werden können.

Hier schafft eine schwimmende Lagerung der Kontakte 341, 371 Abhilfe.

An den Außenumfängen 344, 374 des Gehäuses 349 und des Kontaktträgers 373 sind Dichtungen 363, 383 angeordnet. Die Dichtungen 363, 383 sind in Aufnahmen 364, 384, zum Beispiel Ringnuten, des Gehäuses 349 und des Kontaktträgers 373 bezüglich der Steckachse 20 ortsfest aufgenommen. Beispielsweise stehen Stützvorsprünge in der Art von Stütz-Flanschen nach radial außen vor, so dass die Dichtungen 363, 383 in die durch die Stützvorsprünge definierten Zwischenräume passen.

Die Dichtungen 363, 383 haben umfangsseitig Stützkonturen 365, 385 zur Abstützung an einem Innenumfang der Innenräume 323, 324. Die Stützkonturen 365, 385 sind beispielsweise als vorstehende Rippen 386 ausgestaltet, zwischen denen sich Rillen erstrecken. Die Stützkonturen 365, 385 erstrecken sich über den jeweiligen gesamten Außenumfang der Dichtungen 363, 383. Die Stützkonturen 365, 385 liegen mit ihren freien Stirnseiten an den Innenwänden der Innenumfangskonturen der Innenräume 323, 324 an, so dass diese stirnseitig jeweils dicht verschlossen sind.

Die Rippen 386 sind bezüglich der Steckachse 20 nachgiebig, so dass ein Körper der Dichtungen 363 und 383, von dem die Rippen 386 radial abstehen, in Richtung der Steckachse 20 linear hin und her bewegen kann. Somit sind auch die Fahrzeug-Kontakteinheit 340 und die Lastenträger-Kontakteinheit 370 linear bezüglich der Steckachse 20 beweglich gelagert. Die Fahrzeug-Kontakte 341 und die Lastenträger-Kontakte 371 können sich also linear bezüglich der Steckachse 20 bewegen.

Zudem sind die Rippen 386 quer zur Steckachse 20 nachgiebig, so dass sich die Kontaktträger 343, 373 quer zur Steckachse 20 bewegen können. Die Fahrzeug-Kontakte 341 und die Lastenträger-Kontakte 371 können sich daher quer zur Steckachse 20 bewegen.

Insgesamt ist also ein Toleranzausgleich durch die schwimmende Lagerung der Fahrzeug-Kontakte 341 und der Lastenträger-Kontakte 371 längs und quer zur Steckachse 20 möglich, so dass die Steckkontakte 372 relativ zu den Steckbuchsen 342 eine gewisse Beweglichkeit längs, quer und selbstverständlich auch schräg zur Steckachse 20 aufweisen und somit leicht in die Steckbuchsen 342 einführbar sind.

Die Dichtungen 363, 383 sind elastisch. Dadurch liegen sie sozusagen im Klemmsitz am Innenumfang der Innenräume 323, 324 an. Sie bilden also Klemmmittel.

Weiterhin sind zumindest die Außenumfänge der Dichtungen 363, 383 reibschlüssig, beispielsweise die Außenumfangskonturen der Rippen 386, so dass die Kontaktträger 343, 373 reibschlüssig in den Innenräumen 323, 324 aufgenommen sind.

Diese Maßnahmen können an sich schon ausreichen, um einen ausreichend festen Halt der Fahrzeug-Kontakteinheit 340 bzw. Lastenträger-Kontakteinheit 370 bezüglich der Fahrzeug-Halterung 13k bzw. des Befestigungsarms 51k zu erzielen. Beispielsweise wäre es denkbar, dass an den jeweiligen Rückseiten der Kontakteinheiten 340, 370 rückwärtige Stützkonturen 387 vorgesehen sind, die als Widerlager beim Aneinanderstecken wirken. Selbstverständlich können auch vorderseitig Stützkonturen 388 vorgesehen sein, die beim Lösen der Verbindung zwischen den Kontakteinheiten 340, 370 stützen.

Zwischen den Stützkonturen 387 und/oder 388 und der jeweiligen Kontakteinheit 340, 370, aber auch beispielsweise am radialen Außenumfang der jeweiligen Kontakteinheit, könnten beispielsweise eine oder mehrere Federn angeordnet sein. Exemplarisch ist eine Feder 362 zwischen der hinteren Stützkontur 381 und der Kontakteinheit 340 eingezeichnet.

Die Kontakteinheiten 340, 370 werden von Haltevorsprüngen 389 gehalten, die in Halteaufnahmen 390 der Fahrzeug-Kontakteinheit 340 und der Lastenträger-Kontakteinheit 370 eingreifen. Die Haltevorsprünge 389 stehen in die Innenräume 323, 324 vor. Beispielsweise werden die Haltevorsprünge 389 von Schraubbolzen, insbesondere Madenschrauben, gebildet, die durch Bohrungen 391 am Steckvorsprung 63k und der Steckaufnahme 17k geschraubt sind. Das ermöglicht eine einfache Montage. Nach dem Einschrauben werden die Haltevorsprünge 389 zweckmäßigerweise fixiert, beispielsweise mittels Lack, Klebstoff oder dergleichen, so dass sie sich nicht aus den Bohrungen 391 heraus bewegen können. Die Halteaufnahmen 390 sind beispielsweise an den Trägerkörpern 345, 375 vorgesehen. Diese haben beispielsweise Haltevorsprünge 392. Die Haltevorsprünge 392 sind beispielsweise plattenartig. Die Haltevorsprünge 392 kommen an den Innenflächen der die Innenräume 323, 324 begrenzenden Wände zu liegen oder befinden sich bei diesen Innenflächen, wenn die Kontakteinheit und 340, 370 montiert sind. Die Haltevorsprünge 389 greifen mit einem Spiel in die Halteaufnahmen 390 ein, d.h. die Halteaufnahmen 390 haben quer und/oder längs zur Steckachse 20 eine größere weite, insbesondere einen größeren Durchmesser, als der Steck-Querschnitt der Haltevorsprünge 389. Somit dienen die Haltevorsprünge 389 und die Halteaufnahmen 390 als Befestigungsmittel, die jedoch ein Spiel der Kontakteinheiten 340, 370 längs und quer zur Steckachse 20 zulassen.

Zwar wird bereits durch die polygonale Außenumfangsgestalt des Gehäuses 349 und des Kontaktträgers 373 eine Verdrehsicherung in den Innenräumen 323, 324 realisiert. Vorteilhaft wirken auch die Haltevorsprünge 389 und die Halteaufnahme 390 als Verdrehsicherung. Beispielsweise sind an mindestens zwei bezüglich der Steckachse 20 drehwinkelversetzt den Bereichen jeweils Haltevorsprünge 389 sowie zugeordnete Halteaufnahmen 390 an dem Gehäuse 349 und dem Kontaktträger 373 vorhanden, beispielsweise jeweils zwei einander gegenüberliegende oder um etwa 90°-180° drehwinkelversetzte Haltevorsprünge 389 sowie zugeordnete Halteaufnahmen 390.

Es versteht sich, dass ein solches Befestigungskonzept mit Spiel auch durch Rastmittel realisierbar ist. Beispielsweise könnten Rastvorsprünge 393 an dem Gehäuse 349 oder dem Kontaktträger 373 angeordnet sein, die mit einem Bewegungsspiel in Rastaufnahmen 394 am Innenumfang des Rohrkörpers 312 oder des Rohrkörpers 315 eingreifen.

Die Dichtung 363 kann bereits eine vorgeformte polygonale Umfangskontur haben, die zur Aüßenumfangskontur der Aufnahme 364 passt. Aufgrund der Elastizität der Dichtung 363 ist es aber auch möglich, dass sie die polygonal erst dann einnimmt, wenn sie in der Aufnahme 364 aufgenommen ist.

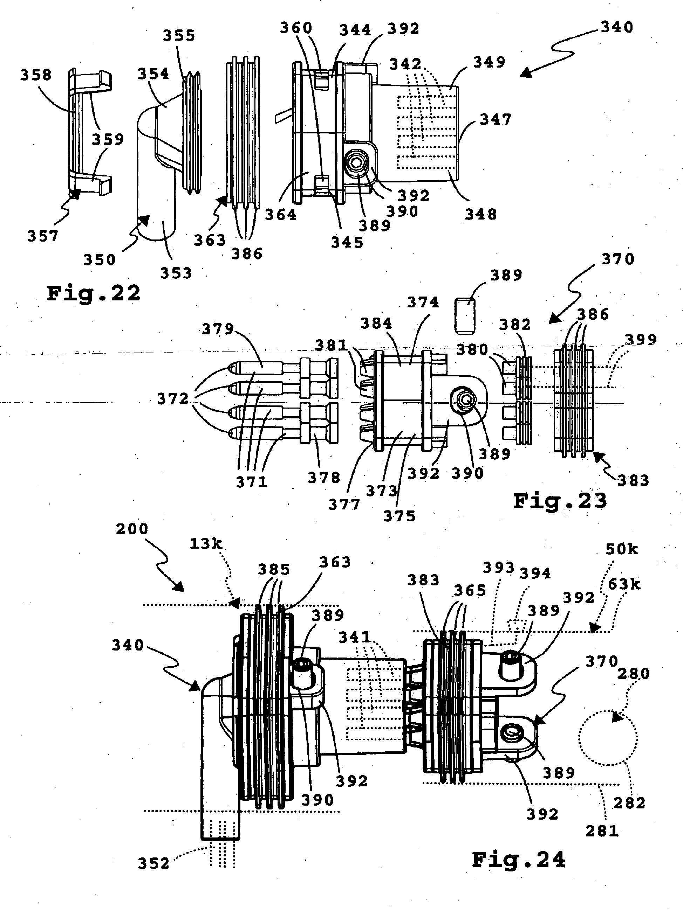

Es versteht sich, dass eine erfindungsgemäße Kontakteinheit, beispielsweise die Kontakteinheit 340 oder die Kontakteinheit 370, auch zur Ankopplung einer Anhängekupplung 280, die zum Beispiel eine Kugelstange umfasst, vorteilhaft geeignet ist. Beispielsweise hat ein in Figur 24 angedeuteter Arm 281 einen Steckvorsprung, der in die Fahrzeug-Halterung 13k passt. Somit könnte beispielsweise anstelle des Lastenträgers 50k auch der Arm 281, der an seinem freien Ende beispielsweise einen Kugelkopf oder ein sonstiges Kupplungselement aufweist, am Fahrzeug 200 befestigt werden. In dem Arm 281 ist dann die Kontakteinheit 370 angeordnet, von der dann beispielsweise elektrische Leitungen für eine Anhängersteckdose 282 weg führen. Die Anhängersteckdose 282 ist vorzugsweise direkt an dem Arm 281 angeordnet.

Ferner können die Fahrzeug-Kontakte und die Lastenträger-Kontakte auch anderweitig ausgestaltet sein. Beispielsweise können die Fahrzeug-Kontakte mindestens einen Steckvorsprung und/oder die Lastenträger-Kontakte mindestens eine Steckbuchse umfassen. Weiter können auch z.B. federnde Kontakte, feste Kontaktflächen oder dergleichen als Fahrzeug-Kontakte oder Lastenträger-Kontakte vorgesehen sein.

## Patentansprüche

1. Kupplung für ein Lastenträger-System für ein Kraftfahrzeug (200), mit einer Fahrzeug-Halterung (13a -13d, 13k) zur Befestigung an einem Heck (201) des Kraftfahrzeugs (200) und mit einem zur Befestigung an der Fahrzeug-Halterung (13a -13d, 13k) vorgesehenen Befestigungsarm (51a-51d, 51k) eines Lastenträgers (50a-50d, 50k), der einen Tragbereich zum Tragen einer Last aufweist, von dem der Befestigungsarm (51a-51d, 51k) zur Befestigung an der Fahrzeug-Halterung (13a -13d, 13k) absteht, und mit Fixiermitteln (23a-23d, 23k), mit denen der Befestigungsarm (51a-51d, 51k) und die Fahrzeug-Halterung (13a -13d, 13k) aneinander fixierbar sind, wobei an der mindestens einen Fahrzeug-Halterung (13a -13d, 13k) und dem mindestens einen Befestigungsarm (51a-51d, 51k) Steckmittel zum Anstecken des mindestens einen Befestigungsarms (51a-51d, 51k) an die mindestens eine Fahrzeug-Halterung (13a -13d, 13k) entlang einer Steckachse (20) vorgesehen sind, wobei die Steckmittel eine Steckaufnahme (17a-17d, 17k) und einen Steckvorsprung (63a-63d, 63k) umfassen, wobei die Fixiermittel (23a-23d, 23k) ein Spannglied (72a; 72b; 72k) umfassen, das an der Steckaufnahme (17a-17d, 17k) oder dem Steckvorsprung (63a-63d, 63k) beweglich gelagert ist und mit dem ein außenseitig an der Steckaufnahme (17a-17d, 17k) oder dem Steckvorsprung (63a-63d, 63k) angeordnetes Spannteil (302) zwischen einer Spannstellung und einer Lösestellung verstellbar ist, wobei das Spannteil (302) mit einem an dem jeweils anderen Bauteil, dem Steckvorsprung (63a-63d, 63k) oder der Steckaufnahme (17a-17d, 17k) angeordneten Widerlager (24a; 24b; 44; 24k) verspannbar ist, wobei die Fixiermittel (23a-23d, 23k) einen Spannanker (67a, 67b; 67k) umfassen, der an einem an der Steckaufnahme (17a-17h) oder dem Steckvorsprung (63a-63h) angeordneten Widerlager (24a; 24b) gehalten ist und sich mit einem Spannglied (72a; 72b) am jeweils anderen Bauteil, dem Steckvorsprung (63a-63h) oder der Steckaufnahme (17a-17h), abstützt, so dass durch Spannen des Spannglieds (72a; 72b) der Steckvorsprung (63a-63h) mit der Steckaufnahme (17a-17h) verspannbar ist, **dadurch gekennzeichnet, dass** das Spannteil (302) in Richtung einer Eingriffstellung, in der das Widerlager (24a; 24b; 44; 24k) und das Spannteil (302) in Eingriff miteinander sind, federbelastet ist.

2. Kupplung nach Anspruch 1, **dadurch gekennzeichnet, dass** das Spannteil (302) einen Spannarm (300) umfasst oder an einem Spannarm (300) angeordnet ist, wobei der Spannarm (300) mit dem Widerlager (24a; 24b; 44; 24k) in Eingriff bringbar ist.

3. Kupplung nach Anspruch 2, **dadurch gekennzeichnet, dass** an dem Spannarm (300) oder dem Widerlager (24a; 24b; 44; 24k) mindestens ein Haken (307) oder Zugvorsprung angeordnet ist, der mit einer Hakenaufnahme (309) oder einer Zugaufnahme am jeweils anderen Bauteil in Eingriff bringbar ist oder dass der Spannarm (300) an dem Steckvorsprung (63a-63d, 63k) oder an der Steckaufnahme (17a-17d, 17k) schwenkbeweglich und/oder verschieblich gelagert ist.

4. Kupplung nach einem der vorhergehenden Ansprüche, **dadurch gekennzeichnet, dass** das Spannteil (302) in Richtung einer Verrastens mit dem Widerlager (24a; 24b; 44; 24k) federbelastet ist oder dass das Spannteil (302) oder das Widerlager (24a; 24b; 44; 24k) eine Verdrängerschräge zum Verdrängen vom dem Widerlager (24a; 24b; 44; 24k) weg beim Einstecken des Steckvorsprungs (63a-63d, 63k) in die Steckaufnahme (17a-17d, 17k) aufweist oder dass das Spannteil (302) oder das Widerlager (24a; 24b; 44; 24k) mindestens eine im Sinne eines Verspannens des Steckvorsprungs (63a-63d, 63k) mit der Steckaufnahme (17a-17d, 17k) wirkende Spannschräge aufweisen.

5. Kupplung nach einem der vorhergehenden Ansprüche, **dadurch gekennzeichnet, dass** Spannanker (67a, 67b; 67k) quer zur Steckachse (20) und/oder quer zur Längserstreckungsrichtung des Befestigungsarms (51a-51d, 51k) wirkt und/oder verläuft.

6. Kupplung nach einem der vorhergehenden Ansprüche, **dadurch gekennzeichnet, dass** der Spannanker (67a, 67b; 67k) das Spannteil (302) aufweist oder mit dem Spannteil (302) zu dessen Betätigung gekoppelt ist, und wobei der Spannanker (67a, 67b; 67k) das Spannglied (72a; 72b; 72k) aufweist und sich mit dem Spannglied (72a; 72b; 72k) an dem Steckvorsprung (63a-63d, 63k) oder der Steckaufnahme (17a-17d, 17k) abstützt.

7. Kupplung nach einem der vorhergehenden Ansprüche, **dadurch gekennzeichnet, dass** der Spannanker (67a, 67b; 67k) den Steckvorsprung (63a-63d, 63k) oder die Steckaufnahme (17a-17d, 17k) durchdringt oder dass der Spannanker (67a, 67b; 67k) mit dem Spannarm (300) bewegungsgekoppelt ist, so dass durch Spannen des Spannankers (67a, 67b; 67k) der Spannarm (300) mit dem Widerlager (24a; 24b; 44; 24k) verspannbar ist, oder dass der Spannanker (67a, 67b; 67k) in Richtung einer Eingreifstellung federbelastet ist, in der das Spannteil (302) in das Widerlager (24a; 24b; 44; 24k) eingreift, oder dass der Spannanker (67a, 67b; 67k) ein Lagerelement für den Spannarm (300) bildet oder dass der Spannarm (300) an dem Spannanker (67a, 67b; 67k) schwenkbeweglich gelagert ist.

8. Kupplung nach einem der vorhergehenden Ansprüche, **dadurch gekennzeichnet, dass** das Widerlager (24a; 24b; 44; 24k) und ein Längsanschlag des Steckvorsprungs (63a-63d, 63k) oder der Steckaufnahme (17a-17d, 17k) bezüglich der Steckachse (20) einen Längsabstand aufweisen und/oder drehwinkelversetzt sind oder an einander entgegengesetzten Seiten des Steckvorsprungs (63a-63d, 63k) oder der Steckaufnahme (17a-17d, 17k) angeordnet sind oder dass das Widerlager (24a; 24b; 44; 24k) mindestens eine Widerlager-Aufnahme (28) zur verdrehsicheren Aufnahme des zweckmäßigerweise an einem Spannanker (67a, 67b; 67k) vorgesehenen Spannteils (302) oder Widerlagerteils (69) aufweist.

9. Kupplung nach einem der vorhergehenden Ansprüche, **dadurch gekennzeichnet, dass** an einander entgegengesetzten Längsendbereichen eines Zugstabes (68) des Spannankers (67a, 67b; 67k) einerseits das Spannteil (302) oder ein Widerlagerteil (69) und andererseits ein Gewinde angeordnet sind, auf das das insbesondere verschließbare Spannglied (72a; 72b; 72k) aufgeschraubt ist.

10. Kupplung nach einem der vorhergehenden Ansprüche oder dem Oberbergriff des Anspruchs 1, **dadurch gekennzeichnet, dass** die Fixiermittel (23a-23d, 23k) ein Schloss aufweisen oder dass die Steckaufnahme (17a-17d, 17k) und/oder der Steckvorsprung (63a-63d, 63k) mindestens ein Rastglied (32) oder ein Sicherungsglied zum Verrasten am jeweils anderen Bauteil oder zum Sichern des Steckvorsprungs (63a-63d, 63k) an der Steckaufnahme (17a-17d, 17k) aufweisen.

11. Kupplung nach einem der vorhergehenden Ansprüche, **dadurch gekennzeichnet, dass** die Steckaufnahme (17a-17d, 17k) und der Steckvorsprung (63a-63d, 63k) bezüglich des Kraftfahrzeugs (200) und somit die Steckachse (20) einen etwa horizontalen Verlauf aufweisen, oder dass das Widerlager (24a; 24b; 44; 24k) außerhalb des Steckvorsprungs (63a-63d, 63k) oder der Steckaufnahme (17a-17d, 17k) angeordnet ist oder dass das Widerlager (24a; 24b; 44; 24k) bezüglich der Steckachse vor einen zum Abstützen des Steckvorsprungs (63a-63d, 63k) vorgesehenen Endabschnitt der Steckaufnahme (17a-17d, 17k) an deren freiem Ende vorsteht, so dass der Steckvorsprung (63a-63d, 63k) ein Drehmoment um den Endabschnitt der Steckaufnahme erfährt, wenn er in der Steckaufnahme (17a-17d, 17k) verspannt ist.

12. Kupplung nach einem der vorhergehenden Ansprüche, **dadurch gekennzeichnet, dass** an der Fahrzeug-Halterung (13a -13d, 13k) und dem Befestigungsarm (51a-51d, 51k) elektrische Fahrzeug-Kontakte (341) und elektrische Lastenträger-Kontakte (371) zur Herstellung einer elektrischen Verbindung zwischen dem Kraftfahrzeug (200) und dem Lastenträger (50a-50d, 50k) vorgesehen sind, wobei die elektrischen Fahrzeug-Kontakte (341) und die elektrischen Lastenträger-Kontakte (371) vorteilhaft in einem Innenraum der Fahrzeug-Halterung (13a -13d, 13k) und des Befestigungsarms (51a-51d, 51k) angeordnet sind, so dass sie eingehaust sind, wenn der Befestigungsarm (51a-51d, 51k) an der Fahrzeug-Halterung (13a -13d, 13k) befestigt ist.

13. Kupplung nach einem der vorhergehenden Ansprüche, **dadurch gekennzeichnet, dass** das Spannglied (72a; 72b; 72k) eine Hülse umfasst, die drehbar gelagert ist, wobei an der Hülse angeordnete, das Spannteil (302) bildende Formschlusskonturen mit Gegenformschlusskonturen des Widerlagers (24a; 24b; 44; 24k) an dem Steckvorsprung (63a-63d, 63k) oder der Steckaufnahme (17a-17d, 17k) durch eine Drehbetätigung der Hülse in Eingriff bringbar sind.

14. Kupplung nach einem der vorhergehenden Ansprüche, **dadurch gekennzeichnet, dass** die Steckaufnahme (17a-17d, 17k) eine zu einer Querschnitt-Außenkontur (64) des Steckvorsprungs (63a-63d, 63k) passende Querschnitt-Innenkontur (19) aufweist, wobei die Außenkontur (64) oder die Innenkontur (19) einen quer zur Steckachse (20) oder quer zur Längserstreckungsrichtung des Befestigungsarms (51a-51d, 51k) vorstehenden Stütz-Vorsprung (65) zum Eingriff in eine quer zur Steckachse (20) oder quer zur Längserstreckungsrichtung des Befestigungsarms (51a-51d, 51k) verlaufende Stütz-Aufnahme (21) der Innenkontur (19) oder der Außenkontur (64) aufweist, wobei die Stütz-Aufnahme (21) den Stütz-Vorsprung (65) oder der Stütz-Vorsprung (65) die Stütz-Aufnahme (21) in vertikaler Richtung stützt.

15. Lastenträger (50a-50d, 50k) oder Kraftfahrzeug (200) mit einer Kupplung nach einem der vorhergehenden Ansprüche.

## Claims

1. Coupling for a load carrier system for a motor vehicle (200), with a vehicle mounting (13a-13d, 13k) for attaching to a rear (201) of the motor vehicle (200) and with a fastening arm (51a-51d, 51k) of a load carrier (50a-50d, 50k) provided for attaching to the vehicle mounting (13a-13d, 13k) and which has a carrying area for carrying a load, from which the fastening arm (51 a-51 d, 51k) protrudes for attaching to the vehicle mounting (13a-13d, 13k) and with fixing means (23a-23d, 23k) by which the fastening arm (51a-51d, 51k) and the vehicle mounting (13a-13d, 13k) may be fixed to one another, wherein on the vehicle mounting or mountings (13a-13d, 13k) and the fastening arm or arms (51 a-51 d, 51k) plug means are provided for plugging the fastening arm or arms (51a-51d, 51k) into the vehicle mounting or mountings (13a-13d, 13k) along an insertion axis (20), wherein the plug means comprise a plug-in socket (17a-17d, 17k) and a plug-in projection (63a-63d, 63k), wherein the fixing means (23a-23d, 23k) include a clamping member (72a; 72b) which is movably mounted on the plug-in socket (17a-17d, 17k) or the plug-in projection (63a-63d, 63k) and may be adjusted by the clamping part (302) located on the outside of the plug-in socket (17a-17d, 17k) or the plug-in projection (63a-63d, 63k) between a clamping position and a release position, wherein the clamping part (302) may be clamped by a thrust bearing (24a; 24b; 44; 24k) provided on the other respective component, namely the plug-in projection (63a-63d, 63k) or the plug-in socket (17a-17d, 17k), wherein the fixing means (23a-23d, 23k) include a clamping anchor (67a, 67b; 67k) which is held on a thrust bearing (24a; 24b) provided on the plug-in socket (17a-17d, 17k) or the plug-in projection (63a-63d, 63k) and rests with a clamping member (72a; 72b) on the other respective component, the plug-in projection (63a-63d, 63k) or the plug-in socket (17a-17d, 17k), so that by clamping of the clamping member (72a; 72b) the plug-in projection (63a-63d, 63k) may be clamped to the plug-in socket (17a-17d, 17k), **characterised in that** the clamping part (302) is spring-loaded in the direction of an engaged position in which the thrust bearing (24a; 24b; 44; 24k) and the clamping part (302) are in engagement with one another.

2. Coupling according to claim 1, **characterised in that** the clamping part (302) includes a clamping arm (300) or is mounted on a clamping arm (300), wherein the clamping arm (300) may be brought into engagement with the thrust bearing (24a; 24b; 44; 24k).

3. Coupling according to claim 2, **characterised in that** there is provided on the clamping arm (300) or the thrust bearing (24a; 24b; 44; 24k) at least one hook (307) or tension projection, which may be brought into engagement with a hook holder (309) or a tension socket on the respective other component, or that the clamping arm (300) is mounted with the ability to swivel and/or slide on the plug-in projection (63a-63d, 63k) or the plug-in socket (17a-17d, 17k).

4. Coupling according to any of the preceding claims, **characterised in that** the clamping part (302) is spring-loaded in the direction of latching with the thrust bearing (24a; 24b; 44; 24k) or that the clamping part (302) or the thrust bearing (24a; 24b; 44; 24k) has a displacer bevel for displacement away from the thrust bearing (24a; 24b; 44; 24k) when the plug-in projection (63a-63d, 63k) is plugged into the plug-in socket (17a-17d, 17k), or that the clamping part (302) or the thrust bearing (24a; 24b; 44; 24k) has at least one clamping bevel for the purpose of clamping the plug-in projection (63a-63d, 63k) to the plug-in socket (17a-17d, 17k).

5. Coupling according to any of the preceding claims, **characterised in that** the clamping anchor (67a, 67b; 67k) acts and/or runs transversely to the insertion axis (20) and/or transversely to the direction of longitudinal extent of the fastening arm (51a-51d, 51k).

6. Coupling according to any of the preceding claims, **characterised in that** the clamping anchor (67a, 67b; 67k) has the clamping part (302) or is connected to the clamping part (302) for its actuation, and wherein the clamping anchor (67a, 67b; 67k) has the clamping member (72a; 72b) and rests with the clamping member (72a; 72b) on the plug-in projection (63a-63d, 63k) or the plug-in socket (17a-17d, 17k).

7. Coupling according to any of the preceding claims, **characterised in that** the clamping anchor (67a, 67b; 67k) penetrates the plug-in projection (63a-63d, 63k) or the plug-in socket (17a-17d, 17k) or that the clamping anchor (67a, 67b; 67k) is movement-coupled to the clamping arm (300), so that by clamping the clamping anchor (67a, 67b; 67k) the clamping arm (300) may be clamped to the thrust bearing (24a; 24b; 44; 24k), or that the clamping anchor (67a, 67b; 67k) is spring-loaded in the direction of an engaged position in which the clamping part (302) engages in the thrust bearing (24a; 24b; 44; 24k), or that the clamping anchor (67a, 67b; 67k) forms a bearing element for the clamping arm (300), or that the clamping arm (300) is mounted pivotably on the clamping anchor (67a, 67b; 67k).

8. Coupling according to any of the preceding claims, **characterised in that** the thrust bearing (24a; 24b; 44; 24k) and a longitudinal stop of the plug-in projection (63a-63d, 63k) or the plug-in socket (17a-17d, 17k) have longitudinal clearance from the insertion axis (20) and/or are rotation-angle-offset or are located on opposite sides of the plug-in projection (63a-63d, 63k) or the plug-in socket (17a-17d, 17k), or that the thrust bearing (24a; 24b; 44; 24k) has at least one thrust bearing socket (28) for non-rotatable holding of the clamping part (302) or thrust bearing part (69) provided expediently on a clamping anchor (67a, 67b; 67k).

9. Coupling according to any of the preceding claims **characterised in that**, provided on opposite longitudinal end sections of a tension rod (68) of the clamping anchor (67a, 67b; 67k) are at one end the clamping part (302) or a thrust bearing part (69) and at the other end a thread, on to which is screwed the clamping member (72a; 72b), which is in particular lockable.

10. Coupling according to any of the preceding claims or the preamble of claim 1, **characterised in that** the fixing means (23a-23d, 23k) have a lock, or that the plug-in socket (17a-17d, 17k) and/or the plug-in projection (63a-63d, 63k) have at least one latching element (32) or a locking member for latching to the respective other component or for locking the plug-in projection (63a-63d, 63k) to the plug-in socket (17a-17d, 17k).

11. Coupling according to any of the preceding claims, **characterised in that** the plug-in socket (17a-17d, 17k) and the plug-in projection (63a-63d, 63k) have a roughly horizontal course relative to the motor vehicle (200) and therefore the insertion axis (20), or that the thrust bearing (24a; 24b; 44; 24k) is located outside the plug-in projection (63a-63d, 63k) or the plug-in socket (17a-17d, 17k), or that the thrust bearing (24a; 24b; 44; 24k), relative to the insertion axis, protrudes at its free end beyond an end section of the plug-in socket (17a-17d, 17k) provided to support the plug-in projection (63a-63d, 63k), so that the the plug-in projection (63a-63d, 63k) undergoes a torsional moment around the end section of the plug-in socket, when it is clamped in the plug-in socket (17a-17d, 17k).

12. Coupling according to any of the preceding claims , **characterised in that** electrical vehicle-contacts (341) and electrical load-carrier-contacts (371) for creating an electrical connection between the motor vehicle (200) and the load carrier (50a-50d, 50k) are provided on the vehicle mounting (13a-13d, 13k) and the fastening arm (51a-51d, 51k), wherein the electrical vehicle-contacts (341) and the electrical load-carrier-contacts (371) are located advantageously in an interior of the vehicle mounting (13a-13d, 13k) and the fastening arm (51a-51d, 51k), so that they are enclosed when the fastening arm (51a-51d, 51k) is attached to the vehicle mounting (13a-13d, 13k).

13. Coupling according to any of the preceding claims, **characterised in that** the clamping member (72a; 72b) includes a sleeve which is rotatably mounted, wherein interlocking contours provided on the sleeve and forming the clamping part (302) may be brought into engagement with mating interlocking contours of the thrust bearing (24a; 24b; 44; 24k) on the plug-in projection (63a-63d, 63k) or the plug-in socket (17a-17d, 17k) by rotary actuation of the sleeve.

14. Coupling according to any of the preceding claims, **characterised in that** the plug-in socket (17a-17d, 17k) has a cross-section internal contour (19) matching a cross-section external contour (64) of the plug-in projection (63a-63d, 63k), wherein the external contour (64) or the internal contour (19) has a support projection (65) protruding transversely to the insertion axis (20) or transversely to the direction of longitudinal extent of the fastening arm (51a-51d, 51k) for engagement in a support location (21) of the internal contour (19) or the outer contour (64) running transversely to the insertion axis (20) or transversely to the direction of longitudinal extent of the fastening arm (51a-51d, 51k), wherein the support location (21) supports the support projection (65) or the support projection (65) the support location (21) in the vertical direction.

15. Load carrier (50a-50d, 50k) or motor vehicle (200) with a coupling according to any of the preceding claims.

## Revendications

1. Embrayage pour un système de support de charges destiné à un véhicule automobile (200), comprenant un système d'attache de véhicule (13a - 13d, 13k) destiné à être fixé au niveau d'un hayon (201) du véhicule automobile (200) et comprenant un bras de fixation (51a - 51d, 51k), pour la fixation d'un support de charges (50a - 50d, 50k), au niveau du système d'attache de véhicule (13a - 13d, 13k), le support de charge présentant une zone porteuse servant à porter une charge, duquel le bras de fixation (51a - 51 d, 51 k) destiné à être fixé au niveau du système d'attache de véhicule (13a - 13d, 13k) fait saillie, et comprenant des moyens de blocage (23a - 23d, 23k), à l'aide desquels le bras de fixation (51a - 51d, 51k) et le système d'attache de véhicule (13a - 13d, 13k) peuvent être bloqués l'une contre l'autre, sachant que sont prévus au niveau d'au moins un système d'attache de véhicule (13a-13d, 13k) et d'au moins un bras de fixation (51a - 51d, 51k) des moyens d'enfoncement servant à enficher au moins un bras de fixation (51a - 51d, 51k) au niveau d'au moins un système d'attache de véhicule (13a - 13d, 13k) le long d'un axe d'enfoncement (20), sachant que les moyens d'enfoncement comprennent un logement d'enfoncement (17a - 17d, 17k) et une partie faisant saillie d'enfoncement (63a - 63d, 63k), sachant que les moyens de blocage (23a - 23d, 23k) comprennent un organe de serrage (72a ; 72b ; 72k), qui est logé de manière mobile au niveau du logement d'enfoncement (17a - 17d, 17k) ou de la partie faisant saillie d'enfoncement (63a - 63d, 63k) et à l'aide duquel une partie de serrage (302) disposée côté extérieur au niveau du logement d'enfoncement (17a - 17d, 17k) ou au niveau de la partie faisant saillie d'enfoncement (63a - 63d, 63k) peut être déplacée entre une position de serrage et une position de desserrage, sachant que la partie de serrage (302) peut être enserrée à l'aide d'un contre-palier (24a ; 24b ; 44 ; 24k) disposé au niveau du respectivement autre composant, au niveau de la partie faisant saillie d'enfoncement (63a - 63d, 63k) ou au niveau du logement d'enfoncement (17a - 17d, 17k), sachant que les moyens de blocage (23a - 23d, 23k) comprennent un système d'ancrage par serrage (67a, 67b ; 67k), qui est attaché au niveau d'un contre-palier (24a ; 24b) disposé au niveau du logement d'enfoncement (17a - 17h) ou au niveau de la partie faisant saillie d'enfoncement (63a - 63h) et s'appuie par un organe de serrage (72a ; 72b) au niveau du respectivement autre composant, au niveau de la partie faisant saillie d'enfoncement (63a - 63h) ou au niveau du logement d'enfoncement (17a - 17h) de sorte que, du fait du serrage de l'organe de serrage (72a ; 72b), la partie faisant saillie d'enfoncement (63a - 63h) peut être enserrée avec le logement d'enfoncement (17a - 17h), **caractérisé en ce que** la partie de serrage (302) est contrainte par un ressort dans la direction d'une position d'engrènement, dans laquelle le contre-palier (24a ; 24b ; 44 ; 24k) et la partie de serrage (302) sont en prise l'un avec l'autre.

2. Embrayage selon la revendication 1, **caractérisé en ce que** la partie de serrage (302) comprend un bras de serrage (300) ou est disposée au niveau d'un bras de serrage (300), sachant que le bras de serrage (300) peut être amené en prise avec le contre-palier (24a ; 24b ; 44 ; 24k).

3. Embrayage selon la revendication 2, **caractérisé en ce qu'**au moins un crochet (307) ou une partie faisant saillie de traction est disposé au niveau du bras de serrage (300) ou du contre-palier (24a ; 24b ; 44 ; 24k), lequel crochet ou laquelle partie faisant saillie de traction peut être amené en prise au niveau du respectivement autre composant avec un logement de crochet (309) ou un logement de traction, ou **en ce que** le bras de serrage (300) est monté de manière mobile par pivotement et/ou de manière mobile par coulissement au niveau de la partie faisant saillie d'enfoncement (63a - 63d, 63k) ou au niveau du logement d'enfoncement (17a - 17d, 17k).

4. Embrayage selon l'une quelconque des revendications précédentes, **caractérisé en ce que** la partie de serrage (302) est contrainte par un ressort dans la direction d'un encliquetage avec le contre-palier (24a ; 24b ; 44 ; 24k), ou **en ce que** la partie de serrage (302) ou le contre-palier (24a ; 24b ; 44 ; 24k) présente un chanfrein de repoussement servant au repoussage de manière à s'éloigner du contre-palier (24a ; 24b ; 44 ; 24k) lors de l'enfichage de la partie faisant saillie d'enfoncement (63a - 63d, 63k) dans le logement d'enfoncement (17a - 17d, 17k), ou **en ce que** la partie de serrage (302) ou le contre-palier (24a ; 24b ; 44 ; 24k) présentent au moins un chanfrein de serrage exerçant une action au sens d'un enserrage de la partie faisant saillie d'enfoncement (63a - 63d, 63k) avec le logement d'enfoncement (17a - 17d, 17k).

5. Embrayage selon l'une quelconque des revendications précédentes, **caractérisé en ce que** le système d'ancrage par serrage (67a, 67b ; 67k) exerce une action et/ou s'étend de manière transversale par rapport à l'axe d'enfoncement (20) et/ou de manière transversale par rapport à la direction d'extension longitudinale du bras de fixation (51a - 51d, 51k).

6. Embrayage selon l'une quelconque des revendications précédentes, **caractérisé en ce que** le système d'ancrage par serrage (67a, 67b ; 67k) présente la partie de serrage (302) ou est couplé à la partie de serrage (302) aux fins de son actionnement, et sachant que le système d'ancrage par serrage (67a, 67b ; 67k) présente l'organe de serrage (72a ; 72b ; 72k) et s'appuie par l'organe de serrage (72a ; 72b ; 72k) au niveau de la partie faisant saillie d'enfoncement (63a - 63d, 63k) ou au niveau du logement d'enfoncement (17a - 17d, 17k).

7. Embrayage selon l'une quelconque des revendications précédentes, **caractérisé en ce que** le système d'ancrage par serrage (67a, 67b ; 67k) traverse la partie faisant saillie d'enfoncement (63a - 63d, 63k) ou le logement d'enfoncement (17a - 17d, 17k), ou **en ce que** le système d'ancrage par serrage (67a, 67b ; 67k) est couplé en mouvement au bras de serrage (300) de sorte que, du fait du serrage du système d'ancrage par serrage (67a, 67b ; 67k), le bras de serrage (300) peut être enserré avec le contre-palier (24a ; 24b ; 44 ; 24k), ou **en ce que** le système d'ancrage par serrage (67a, 67b ; 67k) est contraint par un ressort dans la direction d'une position d'engrènement, dans laquelle la partie de serrage (302) vient en prise avec le contre-palier (24a ; 24b ; 44 ; 24k), ou **en ce que** le système d'ancrage par serrage (67a, 67b ; 67k) forme un élément de palier pour le bras de serrage (300), ou **en ce que** le bras de serrage (300) est monté de manière mobile par pivotement au niveau du système d'ancrage par serrage (67a, 67b ; 67k).

8. Embrayage selon l'une quelconque des revendications précédentes, **caractérisé en ce que** le contre-palier (24a ; 24b ; 44 ; 24k) et une butée longitudinale de la partie faisant saillie d'enfoncement (63a - 63d, 63k) ou du logement d'enfoncement (17a - 17d, 17k) présentent par rapport à l'axe d'enfoncement (20) un espacement longitudinal et/ou sont décalés selon un angle de rotation ou sont disposés au niveau de côtés opposés mutuellement de la partie faisant saillie d'enfoncement (63a - 63d, 63k) ou du logement d'enfoncement (17a - 17d, 17k), ou **en ce que** le contre-palier (24a ; 24b ; 44 ; 24k) présente au moins un logement de contre-palier (28) servant à loger tout en empêchant une torsion la partie de serrage (302) prévue de manière opportune au niveau d'un système d'ancrage par serrage (67a, 67b ; 67k) ou la partie de contre-palier (69).

9. Embrayage selon l'une quelconque des revendications précédentes, **caractérisé en ce que** sont disposés, au niveau de zones d'extrémité longitudinales mutuellement opposées d'une barre de traction (68) du système d'ancrage par serrage (67a, 67b ; 67k), d'une part la partie de serrage (302) ou une partie de contre-palier (69) et d'autre part un filetage, sur lequel l'organe de serrage (72a ; 72b ; 72k) pouvant en particulier être fermé est vissé.

10. Embrayage selon l'une quelconque des revendications précédentes ou selon le préambule de la revendication 1, **caractérisé en ce que** les moyens de blocage (23a - 23d, 23k) présentent une serrure, ou **en ce que** le logement d'enfoncement (17a - 17d, 17k) et/ou la partie faisant saillie d'enfoncement (63a - 63d, 63k) présentent au moins un organe d'encliquetage (32) ou un organe d'immobilisation destiné à être encliqueté au niveau du respectivement autre composant ou servant à immobiliser la partie faisant saillie d'enfoncement (63a - 63d, 63k) au niveau du logement d'enfoncement (17a - 17d, 17k).

11. Embrayage selon l'une quelconque des revendications précédentes, **caractérisé en ce que** le logement d'enfoncement (17a - 17d, 17k) et la partie faisant saillie d'enfoncement (63a - 63d, 63k) par rapport au véhicule automobile (200) et ce faisant l'axe d'enfoncement (20) présentent un profil approximativement horizontal, ou **en ce que** le contre-palier (24a ; 24b ; 44 ; 24k) est disposé en dehors de la partie faisant saillie d'enfoncement (63a - 63d, 63k) ou en dehors du logement d'enfoncement (17a - 17d, 17k), ou **en ce que** le contre-palier (24a ; 24b ; 44 ; 24k) dépasse, par rapport à l'axe d'enfoncement, devant une section d'extrémité, prévue aux fins de l'appui de la partie faisant saillie d'enfoncement (63a - 63d, 63k), du logement d'enfoncement (17a - 17d, 17k) au niveau de l'extrémité libre de celui-ci de sorte que la partie faisant saillie d'enfoncement (63a - 63d, 63k) subit un couple de rotation autour de la section d'extrémité du logement d'enfoncement lorsqu'elle est enserrée dans le logement d'enfoncement (17a - 17d, 17k).

12. Embrayage selon l'une quelconque des revendications précédentes, **caractérisé en ce que** sont prévus, au niveau du système d'attache de véhicule (13a - 13d, 13k) et au niveau du bras de fixation (51a - 51d, 51k), des contacts électriques de véhicule (341) et des contacts électriques de support de charges (371) servant à établir une connexion électrique entre le véhicule automobile (200) et le support de charges (50a - 50d, 50k), sachant que les contacts électriques de véhicule (341) et les contacts électriques de support de charges (371) sont disposés de manière avantageuse dans un espace intérieur du système d'attache de véhicule (13a - 13d, 13k) et du bras de fixation (51a - 51 d, 51 k) de sorte qu'ils sont abrités lorsque le bras de fixation (51a - 51d, 51k) est fixé au niveau du système d'attache de véhicule (13a - 13d, 13k).

13. Embrayage selon l'une quelconque des revendications précédentes, **caractérisé en ce que** l'organe de serrage (72a ; 72b ; 72k) comprend une douille, qui est montée de manière à pouvoir tourner, sachant que des contours à complémentarité de forme disposés au niveau de la douille, formant la partie de serrage (302) peuvent être amenés en prise avec des contours complémentaires à complémentarité de forme du contre-palier (24a ; 24b ; 44 ; 24k) au niveau de la partie faisant saillie d'enfoncement (63a - 63d ; 63k) ou au niveau du logement d'enfoncement (17a - 17d, 17k) par un actionnement par rotation de la douille.

14. Embrayage selon l'une quelconque des revendications précédentes, **caractérisé en ce que** le logement d'enfoncement (17a - 17d, 17k) présente un contour intérieur de section transversale (19) adapté au contour extérieur de section transversale (64) de la partie faisant saillie d'enfoncement (63a - 63d, 63k), sachant que le contour extérieur (64) ou le contour intérieur (19) présentent une partie faisant saillie de soutien (65) dépassant de manière transversale par rapport à l'axe d'enfoncement (20) ou de manière transversale par rapport à la direction d'extension longitudinale du bras de fixation (51a - 51 d, 51 k) servant à venir en prise avec un logement de soutien (21), s'étendant de manière transversale par rapport à l'axe d'enfoncement (20) ou de manière transversale par rapport à la direction d'extension longitudinale du bras de fixation (51a - 51d, 51k), du contour intérieur (19) ou du contour extérieur (64), sachant que le logement de soutien (21) soutient la partie faisant saillie de soutien (65) ou que la partie faisant saillie de soutien (65) soutient le logement de soutien (21) dans la direction verticale.

15. Support de charges (50a - 50d, 50k) ou véhicule automobile (200) comprenant un embrayage selon l'une quelconque des revendications précédentes.
